# EUROPÄISCHE PATENTSCHRIFT

(11) **EP 1 510 561 B1**
(45) Veröffentlichungstag und Bekanntmachung des Hinweises auf die Patenterteilung: **05.08.2009**
(21) Anmeldenummer: 04026973.0
(22) Anmeldetag: 17.01.2000
(51) Int. Cl.: C09D 151/00, C08F 265/06, C09D 5/02, C09D 175/04

(54) **Wässriges Überzugsmittel, Verfahren zu seiner Herstellung und seine Verwendung**
Aqueous coating composition, process for production and use thereof
Composition de revêtement aqueuse, procédé de fabrication et d'utilisation correspondants

(30) Priorität: 29.01.1999 DE 19903391
(43) Veröffentlichungstag der Anmeldung: 02.03.2005
(62) Teilanmeldung aus: 00100234.4
(73) Patentinhaber: Bayer MaterialScience AG, 51368 Leverkusen (DE)
(72) Erfinder: Melchiors, Martin, Dr., 42799 Leichlingen (DE); Bachmann, Rolf, Dr., 51469 Bergisch Gladbach (DE); Hovestadt, Wieland, Dr., 42799 Leichlingen (DE); Noble, Karl-Ludwig, Dr., 51375 Leverkusen (DE); Blum, Harald, Dr., 51375 Leverkusen (DE)

(56) Entgegenhaltungen:
- EP-A- 0 358 979
- EP-A- 0 363 723
- EP-A- 0 365 775
- WO-A-94/04581
- WO-A-99/67339
- DE-A- 4 322 242
- US-A- 3 821 145
- US-A- 4 414 283

## Beschreibung

Die Erfindung betrifft neue wässrige Überzugsmittel, die diesen Überzugsmitteln zugrunde liegenden Copolymerisate, ein Verfahren zu deren Herstellung und ihre Verwendung in Beschichtungsmitteln.

Aus einer Vielzahl von Veröffentlichungen und Patenten ist bekannt, Dispersionen auf Basis von Copolymerisaten in wasserverdünnbaren Lacken und Beschichtungsmitteln einzusetzen.

In der EP-A 0 225 612 und DE-A 3 543 361 werden beispielsweise physikalisch trocknende Polymerisatdispersionen beschrieben, die nach einem zweistufigen Polymerisationsverfahren hergestellt werden, wobei ausschließlich eine der beiden Stufen Carboxylgruppen aufweisende Monomere enthält. Zur Erzielung einer guten Wasserfestigkeit der Beschichtungen wird Ammoniak als Neutralisationsmittel eingesetzt, Zusätze anderer Neutralisationsmittel verschlechtern die Wasserfestigkeit der Filme. Auf die Verwendung Hydroxylgruppen aufweisender Monomere wird verzichtet, da diese die Wasserfestigkeit ungünstig beeinflussen können.

In den EP-A 0 363 723, DE-A 4 009 858, DE-A 4 009 931, EP-A 0 521 919, DE-A 4 009 932, EP-A 0 365 775 werden jeweils Verfahren zur Herstellung mehrschichtiger Überzüge beschrieben, bei denen zunächst eine Basisschicht aufgebracht, daraus ein Polymerfilm gebildet, dann eine Deckschicht aufgebracht und anschließend Basisschicht und Deckschicht gemeinsam eingebrannt werden. Für Basis- bzw. Deckschicht werden dabei nach einem zweistufigen Herstellverfahren erhaltene Copolymerisatdispersionen, gegebenenfalls in Kombination mit Aminoplastharzen eingesetzt. Durch die Verwendung dieser speziellen Copolymerisatdispersionen sind höhere Schichtstärken und gute filmoptische Eigenschaften möglich. Nachteilig bei all diesen Dispersionen ist der hohe Anteil an carboxylfunktionellen Monomeren im hydrophilen Copolymerisatteil.

In der JP-A 80 082 166 werden zweistufig hergestellte Polyacrylatdispersionen beschrieben, die in beiden Stufen Carboxylgruppen enthalten, dies führt zu Dispersionen mit relativ niedrigen Festkörpergehalten und zu Beschichtungen mit verminderter Wasserfestigkeit.

In der US-A 4 151 143 werden zweistufig hergestellte Polyacrylatdispersionen beschrieben, wobei die 1. Stufe in organischer Lösung hergestellt, anschließend dispergiert und in Gegenwart der 1. Stufe eine Emulsionspolymerisation durchgeführt wird. Dadurch resultieren Produkte mit hohen Molekulargewichten, ungünstiger Verfilmung und insgesamt anderen Eigenschaften als übliche Sekundärdispersionen.

In der EP-A 0 557 844 werden wässrige 2Komponenten-Polyurethan-Beschichtungen beschrieben auf Basis von praktisch carboxylatgruppenfreien, durch externe Emulgatoren stabilisierten Emulsionscopolymerisaten und hydrophilen Polyisocyanaten. Aufgrund der hohen Molgewichte der Polymeren und der bleibenden Hydrophilie bei externen Emulgatoren weisen solche Beschichtungssysteme für einige Anwendungen noch Defizite in Wasserfestigkeit, Pigmentbenetzung und Filmoptik auf.

In der EP-A 0 358 979 werden wässrige 2Komponenten-Polyurethan-Reaktivsysteme beschrieben, die bereits ein gutes Eigenschaftsniveau aufweisen. Für manche Anwendungen sind jedoch Verbesserungen im Festkörpergehalt, in der Wasserfestigkeit und der Verarbeitungszeit bzw. Applikationssicherheit wünschenswert.

In der DE-A 4 439 669, DE-A 4 322 242 und JP-A 4 001 245 werden wässrige 2-Komponenten-Polyurethan-Reaktivsysteme auf Basis zweistufig herstellbarer, spezielle Monomere enthaltender Copolymerisate beschrieben. Die speziellen Monomeren sollen verbesserte Eigenschaften ergeben, führen aber dazu, dass die Produkte erheblich teurer werden, so dass die wirtschaftliche Anwendungsmöglichkeiten eingeschränkt sind.

Neben den bereits aufgeführten Nachteilen der Polymerisatdispersionen des Stands der Technik weisen viele dieser Dispersionen eine mangelnde Lagerstabilität bezüglich der Viskosität auf, d.h. die Viskosität der Bindemitteldispersion verringert sich deutlich bei Lagerung. Abhilfe lässt sich durch eine deutliche Anhebung der Säurezahl des Bindemittels schaffen; dies erhöht aber in unerwünschter Weise die Hydrophilie daraus hergestellter Filme und verschlechtert so die Beständigkeitseigenschaften des Lackfilms. Eine wichtige Aufgabe der vorliegenden Erfindung war daher die Bereitstellung einer Bindemitteldispersion mit guter Lagerstabilität, die eine Säurezahl, bezogen auf Festharz, von < 30 mg KOH / g aufweist. Aufgrund der ständig steigenden Ansprüche an das Eigenschaftsniveau von Lacken und Beschichtungen werden von den Bindemitteldispersionen und den daraus hergestellten Lacken außer einer guten Lagerstabilität des Bindemittels insbesondere ein hoher Festkörpergehalt, eine hohe Reaktivität bei guter Topfzeit, gute Beständigkeitseigenschaften gegen Lösemittel, Wasser und Umwelteinflüsse sowie sehr gute Filmoptik (Glanz) und Mechanik (Härte, Flexibilität) gefordert. Um in möglichst vielen Anwendungsbereichen einsetzbar zu sein, ist eine gute Verträglichkeit mit möglichst vielen handelsüblichen Vernetzern unabdingbar. Beim Herstellverfahren sollte die Verwendung zeit- und kostenintensiver Prozesse, wie z.B. Destillationsschritte vermieden werden.

Überraschenderweise wurde jetzt gefunden, dass wässrige Überzugsmittel auf Basis ausgewählter Copolymerisate P mit einer speziellen einheitlichen Molekulargewichtsverteilung, die nach dem im folgenden beschriebenen mehrstufigen Verfahren hergestellt werden, in der Lage sind, die gestellten Anforderungen zu erfüllen.

Die spezielle Molekulargewichtsverteilung der Copolymerisate P wird durch ein definiertes Herstellverfahren erzeugt, welches die folgenden Schritte beinhaltet:
A) Vorlegen eines hydrophoben Polymers welches OH-Gruppen enthält, gegebenenfalls in einem organischen Lösungsmittel gelöst, in ein Reaktionsgefäß,
B): vordosieren eines Radikalstarters, gegebenenfalls gelöst in einem organischen Lösemittel, in das gleiche Reaktionsgefäß,
C): Polymerisation eines hydrophoben, OH-Gruppen enthaltenden Monomergemischs in diesem Reaktionsgefäß bzw. in dieser Reaktionsmischung und
D): Polymerisation eines hydrophilen, OH-Gruppen und Säuregruppen enthaltenden Monomergemischs in diesem Reaktionsgefäß bzw. in dieser Reaktionsmischung.

Dieses Herstellverfahren beinhaltet keinen aufwendigen Destillationsschritt oder ähnliche zeit- und kostenintensive Prozesse. Durch Anwendung des erfindungsgemäßen Herstellverfahrens kann man wässrige Bindemitteldispersionen mit geringer Viskositätsdrift bei Lagerung erhalten, wobei den Bindemitteln eine Säurezahl, bezogen auf Festharz, von <30 mg KOH/g genügt, um diese gute Viskositätsstabilität zu erreichen.

Bevorzugte Gegenstände der Erfindung sind wässrige Überzugsmittel aus mindestens einem hydroxyfunktionellen in Wasser dispergiert oder gelöst vorliegenden Copolymerisat P mit einer Säurezahl, bezogen auf Festharz, von < 30 mg KOH/g, gegebenenfalls weiteren in dieser Mischung gelöst oder dispergiert vorliegenden Bindemittelkomponenten sowie einem oder mehreren wasserlöslichen, wasserdispergierbaren bzw. in der wässrigen Bindemitteldispersion löslichen oder dispergierbaren Vernetzern, dadurch gekennzeichnet, dass das Copolymerisat P durch aufeinanderfolgendes Ausführen der Prozessschritte A) - D):
A): Vorlegen von
   A1) 0 bis 40 Gew.-% (bezogen auf das Copolymerisat P) eines hydroxyfunktionellen hydrophoben Copolymerisats mit einer für Dispergierung oder Lösen von A1 in Wasser nicht ausreichenden Säurezahl <10 mg KOH/g, einem OH-Gehalt von 0,5 bis 7 % (bezogen jeweils auf 100 %iges Harz), einem Zahlenmittel des Molekulargewichts von 1500 bis 20 000 und einem Gehalt an organischen Lösemitteln von 0 bis 60 % (bezogen auf die Masse von A1),
      und
   A2) 0 bis 15 % (bezogen auf das Copolymerisat P) zusätzlichen organischen Lösemitteln,
      wobei vor, während oder im Anschluss von Schritt A auf die gewünschte Polymerisationstemperatur aufgeheizt wird,
B): vordosieren von 5 bis 40 % (bezogen auf die Summe B1 + C2 + D2) eines Radikalstarters B1, gegebenenfalls gelöst in einem organischen Lösemittel,
C): paralleles Zudosieren von 40 bis 80 % (bezogen auf das Copolymerisat P) eines hydrophoben, im Wesentlichen carboxylgruppenfreien Monomergemischs C1, bestehend aus
   c1) 30 bis 90 % (Meth)acrylsäurester mit C₁ bis C₁₈-Kohlenwasserstoffresten im Alkoholteil und/oder Vinylaromaten und/oder Vinylester,
   c2) 10 bis 60 % hydroxyfunktionellen Monomeren,
   c3) 0 bis 2 % säuregruppenhaltigen Monomeren,
      wobei sich c1 + c2 + c3 zu 100 % addieren,
      und einem Radikalstarter C2 in einer Menge, die 25 - 90 % der Summe (B1 + C2 + D2) entspricht, gegebenenfalls gelöst in einem organischen Lösemittel
D): paralleles Zudosieren von 5 bis 50 % (bezogen auf das Copolymerisat P) eines hydrophilen Monomergemischs D1, bestehend aus
   d1) 10 bis 70 % (Meth)acrylsäureester mit C₁ bis C₁₈-Kohlenwasserstoffresten im Alkoholteil und/oder Vinylaromaten und/oder Vinylester,
   d2) 10 bis 70 hydroxyfunktionellen Monomeren und
   d3) 5 bis 30 % säurefunktionellen Monomeren,
      wobei sich d1 + d2 + d3 zu 100 % addieren, und einem Radikalstarter D2 in einer Menge, die 5 bis 40 % der Summe (B1 + C2 + D2) entspricht, gegebenenfalls gelöst in einem organischen Lösemittel, wobei die Gesamtmenge (B1 + C2 + D2) des Radikalstarters (bezogen auf das Copolymerisat P) 0,8 bis 5,0 % beträgt,
   erhalten wird.

Gegenstand der Erfindung sind auch die nach oben beschriebenen Verfahren hergestellten Copolymerisatdispersionen P.

Gegenstand der Erfindung ist auch ein Verfahren zur Herstellung der erfindungsgemäßen in Wasser dispergiert und/oder gelöst vorliegenden Copolymerisate P, die Säurezahlen, bezogen auf Festharz, von <30 mg KOH/g aufweisen, dadurch gekennzeichnet, dass man aufeinanderfolgend die Prozessschritte A bis D
A): Vorlegen von
   A1) 0 bis 40 Gew.-% (bezogen auf das Copolymerisat P) eines hydroxyfunktionellen hydrophoben Copolymerisats mit einer für Dispergierung oder Lösen von A1 in Wasser nicht ausreichenden Säurezahl <10 mg KOH/g, einem OH-Gehalt von 0,5 bis 7 % (bezogen jeweils auf 100 %iges Harz), einem Zahlenmittel des Molekulargewichts von 1500 bis 20 000 und einem Gehalt an organischen Lösemitteln von 0 bis 60 % (bezogen auf die Masse von A1), und
   A2) 0 bis 15 % (bezogen auf das Copolymerisat P) zusätzlichen organischen Lösemitteln,
      wobei vor, während oder im Anschluss von Schritt A auf die gewünschte Polymerisationstemperatur aufgeheizt wird,
B): vordosieren von 5 bis 40 % (bezogen auf die Summe B1 + C2 + D2) eines Radikalstarters B1, gegebenenfalls gelöst in einem organischen Lösemittel,
C): paralleles Zudosieren von 40 bis 80 % (bezogen auf das Copolymerisat P) eines hydrophoben, im Wesentlichen carboxylgruppenfreien Monomergemisch C1, bestehend aus
   c1) 30 bis 90 % (Meth)acrylsäurester mit C₁ bis C₁₈-Kohlenwasserstoffresten im Alkoholteil und/oder Vinylaromaten und/oder Vinylester,
   c2) 10 bis 60 % hydroxyfunktionellen Monomeren,
   c3) 0 bis 2 % säuregruppenhaltigen Monomeren,
      wobei sich c1 + c2 + c3 zu 100 % addieren,
      und einem Radikalstarter C2 in einer Menge, die 25 - 90 % der Summe (B1 + C2 + D2) entspricht, gegebenenfalls gelöst in einem organischen Lösemittel
D): paralleles Zudosieren von 5 bis 50 % (bezogen auf das Copolymerisat P) eines hydrophilen Monomergemischs D1, bestehend aus
   d1) 10 bis 70 % (Meth)acrylsäureester mit C₁ bis C₁₈-Kohlenwasserstoffresten im Alkoholteil und/oder Vinylaromaten und/oder Vinylester,
   d2) 10 bis 70 hydroxyfunktionellen Monomeren und
   d3) 5 bis 30 % säurefunktionellen Monomeren,
      wobei sich d1 + d2 + d3 zu 100 % addieren,
      und einem Radikalstarter D2 in einer Menge, die 5 bis 40 % der Summe (B1 + C2 + D2) entspricht, gegebenenfalls gelöst in einem organischen Lösemittel, wobei die Gesamtmenge (B1 + C2 + D2) des Radikalstarters (bezogen auf das Copolymerisat P) 0,8 bis 5,0 % beträgt,
   ausführt.

Gegenstand der Erfindung ist auch die Verwendung der erfindungsgemäßen wässrigen Überzugsmittel für chemisch vernetzbare Lacke und Beschichtungen.

Die erfindungsgemäßen Copolymerisate P weisen eine spezielle, insbesondere eine sehr einheitliche Molekulargewichtsverteilung auf. Überraschenderweise findet man bei den auf diesen Copolymerisaten basierenden Bindemitteldispersionen eine sehr gute Lagerstabilität, d.h. geringe Viskositätsdrift der Dispersion bei Lagerung, bei hohem Festkörpergehalt in Kombination mit hervorragenden Lackeigenschaften der daraus hergestellten Lacke, wie z.B. hohe Reaktivität bei guter Topfzeit, eine gute Verträglichkeit mit möglichst vielen handelsüblichen Vernetzern, gute Beständigkeitseigenschaften gegen Lösemittel, Wasser und Umwelteinflüsse sowie sehr gute Filmoptik (Glanz) und Mechanik (Härte, Flexibilität).

Bei dem im **Prozessschritt A** vorzulegenden hydrophoben Copolymerisat A1 handelt es sich um ein Harz mit einem mittleren Molekulargewicht Mₙ von 1500 bis 20 000, bevorzugt 2000 bis 6000, das einen Hydroxylgruppengehalt von 0,5 bis 7 %, bevorzugt 1 bis 4 % und eine für eine Alleindispergierung in Wasser nicht ausreichende Säurezahl von <10 mg KOH/g aufweist. Das Copolymerisat A1 kann hydroxy- und säuregruppenfreie Vinylmonomere M1, hydroxyfunktionelle Vinylmonomere M2 und carboxyfunktionelle Monomere M3 enthalten.

Beispiele für Monomere der Gruppe M1 sind (Meth)acrylsäurester mit C₁ bis C₁₈-Kohlenwasserstoffresten im Alkoholteil (z.B. Ethylacrylat, n-Butylacrylat, iso-Butylacrylat, 2-Ethylhexylacrylat, Methylmethacrylat, Ethylmethacrylat, Butylmethacrylat, 2-Ethylhexylmethacrylat), Styrol, Vinyltoluol, α-Methylstyrol, Vinylester, Alkylenoxideinheiten enthaltende Vinylmonomere wie z.B. Kondensationsprodukte von (Meth)acrylsäure mit Oligoalkylenoxidmonoalkylethern bzw. Mischungen dieser und anderer Monomere.

Als hydroxyfunktionelle Monomere M2 können z.B. Hydroxyethylmethacrylat, Hydroxypropylmethacrylat, Hydroxyethylacrylat, Hydroxypropylacrylat, Hydroxybutylacrylat, Hydroxybutylmethacrylat oder Alkylenoxideinheiten enthaltende Hydroxymonomere, wie z.B. Additionsprodukte von Ethylenoxid, Propylenoxid oder Butylenoxid an (Meth) acrylsäure, verwendet werden.

Beispiele für erfindungsgemäß einzusetzende säurefunktionelle Monomere M3 sind z.B. Acrylsäure, Methacrylsäure, Maleinsäure(anhydrid) und andere carboxylfunktionelle oder anhydridfunktionelle copolymerisierbare Monomere.

Das Harz A1 wird in Mengen von 0 bis 40 %, bevorzugt von 10 bis 25 % (bezogen auf das Copolymerisat P) eingesetzt. Es kann lösemittelfrei oder bevorzugt gelöst in organischen Lösemitteln mit einem Festkörper von 40 bis 100 % vorliegen. Gegebenenfalls kann mit zusätzlichen organischen Lösemitteln A2 auf eine geeignete Viskosität verdünnt werden. Als Lösemittel kommen beliebige in der Lacktechnologie bekannte Lösemittel in Betracht, insbesondere solche, die übli-cherweise als Colöser in wässrigen Dispersionen eingesetzt werden, wie z.B. Alkohole, Ether, Ethergruppen-haltige Alkohole, Ester, Ketone, N-Methylpyrrolidon oder unpolare Kohlenwasserstoffe bzw. Gemische dieser Lösemittel. Die organischen Lösemittel verbleiben in der Bindemitteldispersion, es erfolgt kein Destillationsschritt. Insbesondere wird Art und Menge der Komponente A2 so ausgewählt, dass eine ausreichende Kesselfüllhöhe und Wärmeabfuhr zu Beginn der Polymerisation von Teil C sichergestellt wird. Maximal werden als Komponente A2 15 %, bevorzugt 3 bis 10 % (jeweils bezogen auf das Copolymerisat P) eingesetzt.

Bei der im **Prozessschritt B** zuzugebenden Initiatorkomponente B1 handelt es sich um organische Peroxide wie z.B. Di-tert. Butylperoxid oder tert. Butylperoxy-2-ethylhexanoat und Azoverbindungen; B1 kann gegebenenfalls in einem organischen Lösemittel, das bevorzugt als Colöser in der fertigen Bindemitteldispersion verbleiben kann, als Lösung eingesetzt werden. Es ist erfindungswesentlich, dass 5 bis 40 %, bevorzugt 10 bis 25 % der insgesamt verwendeten Initiatormenge (B1 + C2 + D2) als Komponente B1 vordosiert wird. Dies geschieht entweder bei Polymerisationstemperatur über einen Zeitraum von 5 bis 60 min, bevorzugt 10 bis 30 min, oder vor dem Aufheizen, wobei dann die A1, gegebenenfalls A2 und B1 enthaltende Mischung 5 bis 60 min, bevorzugt 10 bis 30 min bei Polymerisationstemperatur gehalten wird, bevor mit der Dosierung der Komponenten C1 und C2 begonnen wird.

Anschließend werden im **Prozessschritt C** parallel eine hydrophobe Monomermischung C1 und eine Initiatorkomponente C2 zudosiert.

Die Monomermischung C1 besteht aus
c1) 30 bis 90 %, bevorzugt 40 - 80 % Monomeren der Gruppe M1, und
c2) 10 bis 60 %, bevorzugt 10 - 30 % hydroxyfunktionellen Monomeren der Gruppe M2
   und ist im Wesentlichen carboxylgruppenfrei. C1 kann aber auch
c3) 0 bis 2 %, bevorzugt 0 - 1 % säuregruppenhaltiger Monomere der Gruppe M3 enthalten,
wobei die durch diese Monomere verursachte Säurezahl nicht für eine Dispergierung oder gar Lösen eines durch Polymerisation von C1 erhaltenen Harzes in Wasser ausreicht, und wobei sich c1 + c2 + c3 zu 100 % addieren.

Die Gesamtmenge der hydrophoben Monomermischung C1 (bezogen auf das Copolymerisat P) beträgt 40 bis 80 %, bevorzugt 45 bis 70 %.

Bei der Initiatorkomponente C2 handelt es sich um Peroxid- oder Azoverbindungen der unter B1 beschriebenen Art, gegebenenfalls gelöst in organischen Lösemitteln. Bevorzugt, aber nicht notwendigerweise wird als Komponente C2 die gleiche Initiatorverbindung wie in B1 eingesetzt. C2 wird in einer Menge von 25 bis 90 %, bevorzugt 50 bis 80 % der insgesamt verwendeten Initiatormenge (B1 + C2 + D2) eingesetzt.

Im **Prozessschritt D** dosiert man dann parallel eine hydrophile Monomermischung D1 und eine Initiatorkomponente D2 zu.

Die Monomermischung D1 besteht aus
d1) 10 bis 70 %, bevorzugt 30 bis 70 % Monomeren der Gruppe M1,
d2) 10 bis 70 %, bevorzugt 20 bis 60 % hydroxyfunktionellen Monomeren der Gruppe M2 und
d3) 5 bis 30 %, bevorzugt 8 bis 20 % säuregruppenhaltigen Monomeren der Gruppe M3,
wobei sich d1 + d2 + d3 zu 100 % addieren.

Bei der Initiatorkomponente D2 handelt es sich um Peroxid- oder Azoverbindungen der unter B1 beschriebenen Art, gegebenenfalls gelöst in organischen Lösemitteln. Bevorzugt, aber nicht notwendigerweise wird als Komponente D2 die gleiche Initiatorverbindung wie in B1 und/oder C2 eingesetzt. D2 wird in einer Menge von 5 bis 40 %, bevorzugt 10 bis 25 % der insgesamt verwendeten Initiatormenge (B1 + C2 + D2) eingesetzt.

Die Gesamtmenge (B1 + C2 + D2) an eingesetztem Initiator beträgt 0,8 bis 5,0 %, bevorzugt 1,5 bis 3,5 %, jeweils bezogen auf das Copolymerisat P. Die Polymerisation kann bei Temperaturen zwischen Raumtemperatur und 200°C, bevorzugt zwischen 50°C und 150°C durchgeführt werden.

Zur Herstellung eines erfindungsgemäßen Copolymerisats P werden die Dosierströme und Dosierzeiten von Monomer- und Initiatorkomponenten sowie die Polymerisationstemperatur im jeweiligen Prozessschritt so bemessen, dass das entstehende Copolymerisat ein mittleres Molekulargewicht Mₙ von 3000 bis 7000, ein mittleres Molekulargewicht M_{w} von 10 000 bis 25 000 und eine Molekulargewichtsverteilung M_{w}/Mₙ von 2,5 bis 4,0 aufweist. In einer bevorzugten Ausfuhrungsform weist das erfindungsgemäß hergestellte Copolymerisat P ein mittleres Molekulargewicht Mₙ von 3500 bis 5500, ein mittleres Molekulargewicht M_{w} von 11 000 bis 20 000 und eine Molekulargewichtsverteilung M_{w}/Mₙ von 3,0 bis 4,0 auf. Ein besonders hohes Eigenschaftsniveau wird erreicht, wenn durch Anwendung des erfindungsgemäßen Verfahrens die nach den Prozessschritten C) und D) erhaltenen Werte von Mₙ um weniger als 1500, bevorzugt um weniger als 800, und von M_{w}/Mₙ um weniger als 1,0, bevorzugt um weniger als 0,5 voneinander abweichen. Idealerweise weisen die im Prozessschritt D) aufgebauten Polymerketten ein mittleres Molekulargewicht Mₙ von 3000 bis 4500 auf.

Die Copolymere P beinhalten sowohl ein Gemisch von Polymerketten, die in den Verfahrensschritten A, C und D gebildet werden als auch Mischungen von Copolymeren aus Bausteinen A1 und den Monomermischungen B1 und/oder C1 oder Mischungen von Copolymeren aus Monomermischungen von B1 und C1. Solche gemischten Copolymere werden durch radikalische Pfropfung oder Umesterungsreaktionen erzeugt. Sie sind für die Stabilität der wässrigen Dispersionen der Copolymere P hilfreich.

Die Molekulargewichtsverteilung wird mittels Gelpermeationschromatographie in THF, Fluss 1 ml/min, kalibriert gegen Polystyrol-Eichstandards gemessen.

Wesentlich für die Eigenschaften der erfindungsgemäß hergestellten Copolymerisate P bzw. der daraus formulierten wässrigen Überzugsmittel ist es auch, dass die Prozessschritte A) - D) im Zusammenhang ausgeführt werden, d.h. dass die hydrophobe Monomermischung C1 in Gegenwart der Komponenten A1, gegebenenfalls A2 und B1 polymerisiert und die hydrophile Monomermischung D1 in Gegenwart des bis einschließlich Prozessschritt C) hergestellten Copolymers polymerisiert wird. Andere Vorgehensweisen, wie z.B. eine Umkehrung der Reihenfolge der Prozessschritte C) und D) oder ein isoliertes Herstellen einzelner Teile des Copolymerisats P führen zu qualitativ schlechteren Dispersionen.

Der OH-Gehalt der 100 %igen Copolymerisate P beträgt 1 bis 8 %, vorzugsweise 1,5 bis 5,5 %, und wird durch relative Menge der eingesetzten hydroxyfunktionellen Monomere M2 in den Prozessschritten C) und D) sowie durch die Wahl des im Prozessschritt A) eingesetzten hydrophoben Copolymerisats A1 eingestellt. Die Säurezahl des 100 %igen Copolymerisats P beträgt 12 bis 30, bevorzugt 15 bis 25 mg KOH/g, und wird durch die relative Menge der eingesetzten säurefunktionellen Monomere M3 in den Prozessschritten C) und D) sowie durch die Wahl des im Prozessschritt A) eingesetzten hydrophoben Copolymerisats A1 eingestellt. Erfindungswesentlich werden mindestens 60 %, bevorzugt mindestens 80 % der insgesamt eingebauten Säuregruppen im Prozessschritt D) in das Copolymerisat P eingebracht. Gegebenfalls kann das Copolymerisat P zur Hydrophilierung zusätzlich zu den Säuregruppen anteilig alkylenoxidhaltige Monomereinheiten in eingebauter Form oder auch externe Emulgatoren enthalten. Bevorzugt werden die Copolymerisate P aber nur durch Säuregruppen hydrophiliert.

Die erfindungsgemäßen Copolymerisate P enthalten 0 - 30 %, bevorzugt 5 - 20 % organische Lösemittel, die in der wässrigen Lieferform verbleiben. Als Lösemittel kommen beliebige in der Lacktechnologie bekannte Lösemittel in Betracht, insbesondere solche, die üblicherweise als Colöser in wässrigen Dispersionen eingesetzt werden, wie z.B. Alkohole, Ether, Ethergruppen-haltige Alkohole, Ester, Ketone, N-Methylpyrrolidon oder unpolare Kohlenwasserstoffe bzw. Gemische dieser Lösemittel. Bevorzugt kommt in den Copolymerisate P eine Lösemittelmischung aus 30 bis 95, bevorzugt 50 bis 80 Gew.-% eines hydrophoben, nicht wassermischbaren, unverseifbaren Lösemittels i), wie z. B. Xylol, Toluol, Solvent Naphta, technische Kohlenwasserstoffgemische wie z.B. Isopar^{®}, Terapin^{®}, Kristallöl, Testbenzin, bzw. Mischungen dieser und anderer hydrophober Lösemittel sowie ii) 5 bis 70, bevorzugt 20 bis 50 Gew.-% wassermischbarer bzw. wasserlöslicher, unverseifbarer Lösemittel wie z.B. Butylglykol, Methoxypropanol, Butyldiglykol, Diethylenglykol, Dipropylenglykol, Ethylglykol, Propylglykol, Methyldiglykol bzw. Mischungen dieser und anderer wassermischbarer bzw. wasserlöslicher unverseifbarer Lösemittel zum Einsatz. Die Herstellung der Copolymerisate P erfolgt dabei vorzugsweise unter Ausschluss von Wasser, nur in organischen Lösemitteln.

Art und Menge des eingesetzten organischen Lösemittels bzw. Lösemittelgemischs wird so bemessen, dass einerseits die gewünschten Eigenschaften des Lacks wie z.B. Verlauf, Trocknung oder VOC-Wert erreicht und andererseits eine ausreichende Kesselfüllhöhe und Wärmeabfuhr zu Beginn der Polymerisation von Teil C sichergestellt wird.

Zur Neutralisation der im Copolymerisat P einpolymerisierten Carboxylgruppen können organische Amine oder wasserlösliche anorganische Basen eingesetzt werden. Bevorzugt sind N-Methylmorpholin, Triethylamin, Dimethylethanolamin, Dimethylisopropanolamin, Methyldiethanolamin. Ebenfalls geeignet sind Diethylethanolamin, Butanolamin, Morpholin, 2-Aminomethyl-2-methylpropanol, Isophorondiamin. Weniger gut geeignet, jedoch mitverwendbar ist Ammoniak. Das Neutralisationsmittel wird in solchen Mengen zugesetzt, dass 70 bis 170 %, vorzugsweise mehr als 90 % der Carboxylgruppen in Salzform vorliegen. Es wurde gefunden, dass bei diesem Neutralisationsgrad Dispersionsstabilität, Lackstabilität, Pigmentbenetzung und die filmoptischen Eigenschaften deutlich verbessert werden können.

Der pH-Wert der wässrigen Dispersion beträgt 6,0 bis 11,0, vorzugsweise 7,0 bis 9,0.

Die wässrigen Bindemitteldispersionen (= Dispersionen der Copolymerisate P) wiesen einen Festkörpergehalt von 30 bis 60 %, bevorzugt 40 bis 50 % sowie einen Gehalt an organischen Lösemitteln von 0 bis 15 %, bevorzugt 3 bis 10 % auf. Sollten besonders niedrige Lösemittelgehalte erforderlich sein, können die eingesetzten Lösemittel natürlich auch durch eine Destillation wieder teilweise entfernt werden; die Durchführung des erfindungsgemäßen Verfahrens wird dadurch aber nicht beeinträchtigt.

Die erfindungsgemäßen in Wasser dispergiert und/oder gelöst vorliegenden Copolymerisate P werden gegebenenfalls zusammen mit anderen Bindemitteln oder Dispersionen, z.B. auf Basis von Polyestern, Polyurethanen, Polyethern, Polyepoxiden oder Polyacrylaten in Kombination mit Vernetzerharzen und gegebenenfalls Pigmenten und sonstigen in der Lackindustrie bekannten Hilfs-und Zusatzstoffen in oder als Lack bzw. Beschichtungsmittel eingesetzt. 50 bis 95 Gew.-%, vorzugsweise 65 bis 90 Gew.-% Copolymerisat P, gegebenenfalls in Abmischung mit anderen Bindemitteln oder Dispersionen werden dabei mit 5 bis 50, vorzugsweise 10 bis 35 Gew.-% Vernetzerharz bzw. Mischungen verschiedener Vernetzerharze kombiniert.

Durch Kombination mit Vernetzern können dabei, je nach Reaktivität oder ggf. Blockierung der Vernetzer, sowohl Einkomponentenlacke als auch Zweikomponentenlacke formuliert werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichen Ausmaß stattfindet. Die Vernetzungsreaktion findet erst bei Applikation nach einer Aktivierung des Vernetzers statt; diese Aktivierung kann z.B. durch Temperatursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung; zur Beschleunigung der Vernetzungsreaktion können aber auch Katalysatoren eingesetzt oder höhere Temperaturen angewendet werden.

Als Vernetzerharze eignen sich beispielsweise Amid- und Amin-Formaldehydharze, Phenolharze, Aldehyd- und Ketonharze, wie z. B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Gut geeignet als Vernetzerharze sind auch blockierte Polyisocyanate, beispielsweise auf Basis von Isophorondiisocyanat, Hexamethylendiisocyanat, 1,4-Diisocyanatocyclohexan, Bis-(4-isocyanatocyclohexan)-methan oder 1,3-Diisocyanatobenzol oder auf Basis von Lackpolyisocyanaten wie Biuret- oder Isocyanuratgruppen aufweisende Polyisocyanate von 1,6-Diisocyanatohexan, Isophorondiisocyanat oder Bis-(4-isocyanatocyclohexan)-methan, oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartigen Polyhydroxylverbindungen andererseits.

Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Die hydrophile Modifizierung der Copolymerisatkomponente A) reicht im allgemeinen aus, um auch die Dispergierbarkeit der Vernetzerharze, soweit es sich nicht ohnehin um wasserlösliche oder -dispergierbare Substanzen handelt, zu gewährleisten.

Wasserlösliche bzw. dispergierbare, blockierte Polyisocyanate sind z.B. durch Modifikation mit Carboxylat- und/oder Polyethylenoxidgruppen und/oder Polyethylenoxid/Polypropylenoxidgruppen erhältlich.

Ebenfalls geeignete Vernetzerharze sind niedrigviskose, hydrophobe oder hydrophile Polyisocyanate mit freien Isocyanatgruppen auf Basis aliphatischer, cycloaliphatischer, araliphatischer und/oder aromatischer Isocyanate. Diese Polyisocyanate weisen bei 23°C im allgemeinen eine Viskosität von 10 bis 3500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 beschrieben. Besonders gut geeignet sind auch die in der DE-A 19 822 891 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Ebenso möglich ist die Hydrophilierung durch Zusatz handelsüblicher Emulgatoren.

Es können auch Mischungen verschiedener Vernetzerharze eingesetzt werden.

In einer bevorzugten Ausführungsform werden Mischungen eines hydrophilen und eines niedrigviskosen hydrophoben Polyisocyanats in Kombination mit den erfindungsgemäßen Dispersionen in wässrigen 2Komponenten-Systemen, welche bei Raumtemperatur reaktiv sind, eingesetzt. Bevorzugte Mischungen sind dabei Mischungen aus 30 bis 90 Gew.-% eines hydrophil modifizierten, gegebenenfalls Allophanatgruppen enthaltenden Polyisocyanats auf Basis Hexamethylendiisocyanat und 70 bis 10 Gew.-% eines nicht hydrophil modifizierten Polyisocyanats auf Basis Hexamethylendiisocyanat und/oder Isophorondiisocyanat und/oder Bis-(4-isocyana-tocyclohexyl)-methan, sowie Mischungen aus 10 bis 65 Gew.-% eines niedrigviskosen, nicht hydrophil modifizierten Polyisocyanats auf Basis von Hexamethylendiisocyanat mit Isocyanurat-, Biuret-, Allophanat- und/oder Uretdionstruktureinheiten und 90 bis 35 Gew.-% eines hydrophil modifizierten, gegebenenfalls Allophanatgruppen enthaltenden Polyisocyanats auf Basis Isophorondiisocyanat. Unter niedrigviskos sind dabei vorzugsweise Viskositäten von 10 bis 1500 mPas/23°C zu verstehen. Auch Triisocyanatononan kann allein oder in Mischungen als Vernetzerkomponente eingesetzt werden.

In einer weiteren bevorzugten Ausführungsform werden Mischungen aus gegebenenfalls hydrophil modifizierten Polyisocyanaten mit freien Isocyanatgruppen und Aminovernetzerharzen, welche vorzugsweise keine freien Aminogruppen aufweisen, mit den erfindungsgemäßen Bindemitteldispersionen kombiniert und vorzugsweise bei Temperaturen von 60 bis 120°C ausgehärtet. Solche Mischungen enthalten vorzugsweise 25 bis 68 Gew.-% Polyisocyanate mit freien Isocyanatgruppen und 75 bis 32 Gew.-% Aminovernetzerharze.

Vor, während oder nach der Herstellung der wässrigen Bindemittelkombinationen durch Abmischung der Einzelkomponenten und auch im Fall der Herstellung von einkomponentig zu verarbeitenden Beschichtungsmitteln können die üblichen Hilfs- und Zusatzmittel der Lacktechnologie zugesetzt werden, wie z.B. Entschäumungsmittel, Verdickungsmittel, Pigmente, Dispergierhilfsmittel, Katalysatoren, Hautverhinderungsmittel, Antiabsetzmittel, Emulgatoren.

Die so erhaltenen erfindungsgemäßen Beschichtungsmittel eignen sich für alle Einsatzgebiete, in denen wässrige Anstrich- und Beschichtungssysteme mit einem erhöhten Eigenschaftsprofil Verwendung finden, z.B. Beschichtung mineralischer Baustoff-Oberflächen, Lackierung und Versiegelung von Holz und Holzwerkstoffen, Beschichtung metallischer Oberflächen (Metallbeschichtung); Beschichtung und Lackierung asphalt- oder bitumenhaltiger Beläge, Lackierung und Versiegelung diverser Kunststoffoberflächen (Kunststoffbeschichtung) sowie Hochglanzlacke.

Bei den unter erfindungsgemäßer Verwendung der erfindungsgemäßen Bindemittelkombinationen hergestellten Lacken bzw. Beschichtungsmitteln handelt es sich um Grundierungen, Füller, pigmentierte oder transparente Decklacke, Klarlacke und Hochglanzlacke, sowie Einschichtlacke, die in der Einzel- und Serienapplikation, z.B. im Bereich der Industrielackierung, Automobil-Erst- und -Reparaturlackierung, Anwendung finden können.

Bevorzugte Verwendungen der erfindungsgemäßen in Wasser dispergiert und/oder gelöst vorliegenden Copolymerisate P ist in Kombination mit Polyisocyanaten bzw. besonders bevorzugt in Kombination mit Mischungen von hydrophilen und hydrophoben Polyisocyanaten zur Beschichtung bzw. Lackierung metallischer Oberflächen oder Kunststoffen bei Raumtemperatur bis 140°C, oder in Kombination mit Aminovernetzerharzen zur Beschichtung und Lackierung metallischer Oberflächen bei 110 bis 180°C in Form von Einschichtlacken oder als Decklacke.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die erfindungsgemäß herzustellenden und zu verwendenden Lacke und Beschichtungsmassen können jedoch auch nach anderen Methoden, beispielsweise durch Streichen, Rollen oder Rakeln appliziert werden.

### Beispiele

Die folgenden Beispiele sollen die Erfindung näher erläutern, ohne sie jedoch einzuschränken. Alle Angaben in % beziehen sich auf das Gewicht. Viskositätsmessungen wurden in einem Kegel-Platte-Viskosimeter nach DIN 53019 bei einem Schergefälle von 40 s⁻¹ durchgeführt. GPC-Messungen wurden auf einer Säulenkombination der Firma Macherey & Nagel, gefüllt mit teilvernetztem Polystyrol/Divinylbenzol-Gel (Nucleogel), durchgeführt:
1. (Vorsäule) Nucleogel GPC 10P, 10 µm, 50 x 7,7 mm
2. Nucleogel GPC 106-10, 10 µm, 300 x 7,7 mm
3. Nucleogel GPC 104-10, 10 µm, 300 x 7,7 mm
4. Nucleogel GPC 500-10, 10 µm, 300 x 7,7 mm
5. Nucleogel GPC 100-10, 10 µm, 300 x 7,7 mm
weitere Hardware-Komponenten:
Säulenofen: Merck L 7360;
Pumpe, Injektor: Hewlett Packard 1050 Serie II;
Detektoren: DAD Hewlett Packard 1050 + RI-Detektor Hewlett Packard 1047 A

Laufmittel ist THF mit einer Flussrate von 0,6 ml/min bei einem Druck von ca. 65 bar; Messtemperatur ist 30°C. Es werden 100 µl Probe mit einer Polymerkonzentration von ca. 5,0 g/l eingespritzt. Die Kalibrierung erfolgt mit eng verteilten Polystyrol-Eichstandards der Fa. Polymer-Standard-Service GmbH (PSS) des entsprechenden Molekulargewichtsbereichs.

### Beispiel 1 (erfindungsgemäß):

In einem 6 1-Reaktionsgefäß mit Rühr-, Kühl- und Heizvorrichtung werden 515 g eines hydrophoben Polyacrylatharzes (Desmophen^{®} A 160, Bayer AG), 60 Gew. %-ig gelöst in Solvent Naphtha 100, mit einem OH-Gehalt (100 %ig) von 2,6 %, einer Säurezahl (100 %ig) von 5 mg KOH / g, einem mittleren Molekulargewicht Mₙ von 4800 und einer Polydispersität M_{w}/Mₙ von 2,9, zusammen mit 172 g n-Butoxypropanol (A2) vorgelegt und auf 138°C aufgeheizt. Bei dieser Temperatur gibt man eine Lösung (B1) aus 8 g Di-*tert*.butylperoxid in 8 g n-Butoxypropanol in 20 min zu. Im Anschluss daran dosiert man eine Monomermischung (C1) aus 762 g Methylmethacrylat, 355 g Butylmethacrylat, 52 g Butylacrylat und 507 g Hydroxyethylmethacrylat sowie parallel dazu eine Lösung (C2) von 32,5 g Di-*tert*.butylperoxid in 35 g n-Butoxypropanol bei dieser Temperatur innerhalb von 4 Stunden 30 min zu. Man hält die Mischung 30 min bei 138°C und dosiert anschließend eine Mischung (D1) aus 128 g Methylmethacrylat, 100 g Butylacrylat, 180 g Hydroxyethylmethacrylat und 60 g Acrylsäure sowie parallel dazu eine Lösung (D2) von 8 g Di-*tert*.butylperoxid in 20 g n-Butoxypropanol in 90 min zu. Nach einer weiteren Stunde Rühren bei 138°C wird auf 90°C abgekühlt, 78 g Dimethylethanolamin zugegeben, homogenisiert und in 2400 g Wasser dispergiert. Man erhält ein in Wasser dispergiert vorliegendes Copolymerisat P mit einem OH-Gehalt (100 %ig) von 3,9 %, einer Säurezahl (100 %ig) von 20 mg KOH/g und einem Festkörpergehalt von 47 % bei einer Viskosität (frisch hergestellt) von ca.1500 mPas (23°C, Schergefälle 40⁻¹ ). Der pH-Wert (10 %ig in Wasser) beträgt 8,4, der Neutralisationsgrad beträgt 105 %. Die Dispersion ist gut filtrierbar und weist eine mittlere Teilchengröße von ca. 200 nm auf. Nach 6 Wochen Lagerung bei Raumtemperatur beträgt die Viskosität der Dispersion 1200 mPas.

### Beispiel 2 (erfindungsgemäß):

Man verfährt wie in Bsp. 1, mit dem Unterschied, dass als Monomermischung C1 ein Gemisch aus 438 g Methylmethacrylat, 410 g Butylmethacrylat, 437 g Isobutylmethacrylat und 390 g Hydroxyethylmethacrylat zudosiert wird. Die zur Dispergierung und Viskositätseinstellung notwendige Wassermenge beträgt hier ca. 2600 g. Man erhält ein in Wasser dispergiert vorliegendes Copolymerisat P mit einem OH-Gehalt (100 %ig) von 3,3 %, einer Säurezahl (100 %ig) von 21 mg KOH/g und einem Festkörpergehalt von 45 % bei einer Viskosität (frisch hergestellt) von ca.1450 mPas (23°C, Schergefälle 40⁻¹). Der pH-Wert (10 %ig in Wasser) beträgt 8,3, der Neutralisationsgrad beträgt 105 %. Die Dispersion weist eine mittlere Teilchengröße von ca.170 nm auf. Nach 6 Wochen Lagerung bei Raumtemperatur beträgt die Viskosität der Dispersion 1100 mPas.

### Beispiel 3 (erfindungsgemäß):

Man verfährt wie in Bsp. 1, mit dem Unterschied, dass als Monomermischung C1 ein Gemisch aus 135 g Methylmethacrylat, 525 g Butylmethacrylat, 625 g Isobomylmethacrylat und 390 g Hydroxyethylmethacrylat zudosiert wird. Die zur Dispergierung und Viskositätseinstellung notwendige Wassermenge beträgt hier ca. 2900 g. Man erhält ein in Wasser dispergiert vorliegendes Copolymerisat P mit einem OH-Gehalt (100 %ig) von 3,3 %, einer Säurezahl (100 %ig) von 21 mg KOH/g und einem Festkörpergehalt von 43 % bei einer Viskosität (frisch hergestellt) von ca.1400 mPas (23°C, Schergefälle 40⁻¹). Der pH-Wert (10%ig in Wasser) beträgt 8,3, der Neutralisationsgrad beträgt 105 %. Die Dispersion weist eine mittlere Teilchengröße von ca.160 nm auf. Nach 6 Wochen Lagerung bei Raumtemperatur beträgt die Viskosität der Dispersion 1050 mPas.

### Beispiel 4 (erfindungsgemäß):

In einem 6 1-Reaktionsgefäß mit Rühr-, Kühl- und Heizvorrichtung werden 515 g eines hydrophoben Polyacrylatharzes (Desmophen^{®} A 160, Bayer AG), 60 %ig gelöst in Solvent Naphtha 100, mit einem OH-Gehalt (100 %ig) von 2,6 %, einer Säurezahl (100 %ig) von 5 mg KOH / g, einem mittleren Molekulargewicht Mₙ von 4800 und einer Polydispersität M_{w}/Mₙ von 2,9, zusammen mit einem Gemisch (A2) aus 88 g Butylglykol und 94 g Solvent Naphtha 100 vorgelegt und auf 143°C aufgeheizt. Bei dieser Temperatur gibt man eine Lösung (B1) aus 9 g Di-*tert*.butylperoxid in 9 g Solvent Naphtha 100 in 20 min zu. Im Anschluss daran dosiert man eine Monomermischung (C1) aus 234 g Methylmethacrylat, 295 g Butylmethacrylat, 544 g Butylacrylat und 698 g Hydroxypropylmethacrylat sowie parallel dazu eine Lösung (C2) von 35 g Di-*tert*.butylperoxid in 35 g Solvent Naphtha 100 bei dieser Temperatur innerhalb von 4 Stunden 30 min zu. Man hält die Mischung 30 min bei 143°C und dosiert anschließend eine Mischung (D1) aus 113 g Butylacrylat, 187 g Hydroxypropylmethacrylat und 68 g Acrylsäure sowie parallel dazu eine Lösung (D2) von 9 g Di-*tert*.butylperoxid in 9 g Solvent Naphtha 100 in 90 min zu. Nach einer weiteren Stunde Rühren bei 143°C wird auf 90°C abgekühlt, 83 g Dimethylethanolamin zugegeben, homogenisiert und in 2400 g Wasser dispergiert. Man erhält ein in Wasser dispergiert vorliegendes Copolymerisat P mit einem OH-Gehalt (100 %ig) von 4,5 %, einer Säurezahl (100 %ig) von 24 mg KOH/g und einem Festkörpergehalt von 46 % bei einer Viskosität (frisch hergestellt) von ca.1700 mPas (23°C, Schergefälle 40⁻¹). Der pH-Wert (10 %ig in Wasser) beträgt 8,5, der Neutralisationsgrad beträgt 100 %. Die Dispersion ist gut filtrierbar und weist eine mittlere Teilchengröße von ca. 115 um auf. Nach 6 Wochen Lagerung bei Raumtemperatur beträgt die Viskosität der Dispersion 1530 mPas.

### Beispiel 5 (erfindungsgemäß):

In einem 6 1-Reaktionsgefäß mit Rühr-, Kühl- und Heizvorrichtung werden 515 g eines hydrophoben Polyacrylatharzes (Desmophen^{®} A 160, Bayer AG), 60 %ig gelöst in Solvent Naphtha 100, mit einem OH-Gehalt (100 %ig) von 2,6 %, einer Säurezahl (100 %ig) von 5 mg KOH/g, einem mittleren Molekulargewicht Mₙ von 4800 und einer Polydispersität M_{w}/Mₙ von 2,9, zusammen mit 172 g Butylglykol vorgelegt und auf 138°C aufgeheizt. Bei dieser Temperatur gibt man eine Lösung aus 8 g Di-*tert*.butylperoxid in 8 g Butylglykol in 20 min zu. Im Anschluss daran dosiert man eine Mischung aus 678 g Methylmethacrylat, 106 g Styrol, 503 g Butylacrylat und 390 g Hydroxyethylmethacrylat sowie parallel dazu eine Lösung von 32,5 g Di-*tert*.butylperoxid in 35 g Butylglykol bei dieser Temperatur innerhalb von 4 h zu. Man hält die Mischung 30 min bei 138°C und dosiert anschließend eine Mischung aus 128 g Methylmethacrylat, 100 g Butylacrylat, 180 g Hydroxyethylmethacrylat und 58 g Acrylsäure sowie parallel dazu eine Lösung von 8 g Di-*tert*.butylperoxid in 20 g Butylglykol in 90 min zu. Nach einer weiteren Stunde Rühren bei 138°C wird auf 90°C abgekühlt, 78 g Dimethylethanolamin zugegeben, homogenisiert und in 2300 g Wasser dispergiert. Man erhält ein in Wasser dispergiert vorliegendes Copolymerisat P mit einem OH-Gehalt (100 %ig) von 3,3 %, einer Säurezahl (100 %ig) von 20 mg KOH/g und einem Festkörpergehalt von 47 % bei einer Viskosität (frisch hergestellt) von ca.1500 mPas (23°C, Schergefälle 40⁻¹ ). Der pH-Wert (10 %ig in Wasser) beträgt 8,5, der Neutralisationsgrad beträgt 105 %. Die Dispersion ist gut filtrierbar und weist eine mittlere Teilchengröße von ca.120 nm auf. Nach 6 Wochen Lagerung bei Raumtemperatur beträgt die Viskosität der Dispersion 1270 mPas.

### Beispiel 6 (nicht erfindungsgemäß):

In einem 6 1-Reaktionsgefäß mit Rühr-, Kühl- und Heizvorrichtung werden 515 g eines hydrophoben Polyacrylatharzes (Desmophen^{®} A 160, Bayer AG), 60 %ig gelöst in Solvent Naphtha 100, mit einem OH-Gehalt (100 %ig) von 2,6 %, einer Säurezahl (100 %ig) von 5 mg KOH/g, einem mittleren Molekulargewicht Mₙ von 4800 und einer Polydispersität M_{w}/Mₙ von 2,9, zusammen mit 156 g Butylglykol vorgelegt und auf 138°C aufgeheizt. Bei dieser Temperatur dosiert man zunächst eine Mischung aus 756 g Methylmethacrylat, 500 g Butylacrylat und 390 g Hydroxyethylmethacrylat in 3 h und, nach 30 min Halten der Temperatur, daran anschließend in weiteren 90 min eine Mischung aus 127 g Methylmethacrylat, 100 g Butylacrylat, 180 g Hydroxyethylmethacrylat und 58 g Acrylsäure zu. Parallel zur Monomerdosierung gibt man eine Lösung von 80 g Di-*tert*.butylperoxid in 80 g Butylglykol in einer solchen Geschwindigkeit zu, dass die Peroxid-Dosierung 40 min nach Beendigung der Monomerdosierung abgeschlossen ist; während der 30-minütigen Dosierpause zwischen den Monomerströmen wird auch die Peroxiddosierung unterbrochen. Nach Beendigung der Monomer- und Peroxidzugabe wird noch 2 h bei 138°C gerührt, auf 90°C abgekühlt, 78 g Dimethylethanolamin zugegeben, homogenisiert und in 2600 g Wasser dispergiert. Man erhält eine wässrige Copolymerisat-Dispersion mit einem OH-Gehalt (100 %ig) von 3,3 %, einer Säurezahl (100 %ig) von 20 mg KOH/g und einem Festkörpergehalt von 45 % bei einer Viskosität (frisch hergestellt) von ca.1500 mPas (23°C, Schergefälle 40⁻¹ ). Der pH-Wert (10 %ig in Wasser) beträgt 8,5, der Neutralisationsgrad beträgt 105 %. Die Dispersion ist gut filtrierbar und weist eine mittlere Teilchengröße von ca.140 nm auf. Nach 6 Wochen Lagerung bei Raumtemperatur beträgt die Viskosität der Dispersion 680 mPas.

### Beispiel 7 (nicht erfindungsgemäß)

In einem 6 1-Reaktionsgefäß mit Rühr-, Kühl- und Heizvorrichtung werden 186 g Butylglykol und 186 g Solvent Naphta eingewogen und auf 143°C erhitzt. Dann wird eine Mischung I) aus 750 g Methylmethacrylat, 125 g Styrol, 445 g Hydroxyethylmethacrylat, 538 g Butylacrylat und 87 g Butylmethacrylat in 3 Stunden und direkt im Anschluss daran eine Mischung II) aus 128 g Methylmethacrylat, 180 g Hydroxyethylmethacrylat, 100 g Butylacrylat und 60 g Acrylsäure in 1½ Stunden zudosiert. Parallel dazu werden in 5 Stunden 88 g Di-tert. Butylperoxid in 70 g einer 1:1 Mischung von Butylglykol und Solvent Naphta zudosiert. Nach weiteren 2 Stunden Rühren bei 145°C wird auf 100°C abgekühlt, 76 g Dimethylethanolamin zugegeben, homogenisiert und in 2700 g Wasser dispergiert. Man erhält ein in Wasser dispergiert vorliegendes Copolymerisat mit einem OH-Gehalt (100 %ig) von 3,3 %, einer Säurezahl (100 %ig) von 21 mg KOH/g und einem Festkörpergehalt von 44 % bei einer Viskosität (frisch hergestellt) von ca.800 mPas (23°C, Schergefälle 40⁻¹). Der pH-Wert (10 %ig in Wasser) beträgt 8,1, der Neutralisationsgrad beträgt 105 %. Die Dispersion ist gut filtrierbar und weist eine mittlere Teilchengröße von ca.105 nm auf. Nach 6 Wochen Lagerung bei Raumtemperatur beträgt die Viskosität der Dispersion 360 mPas.

### Beispiel 8 (nicht erfindungsgemäß):

Man verfährt wie bei **Beispiel 7,** dispergiert jedoch nur in ca. 2600 g Wasser. Man erhält eine Dispersion mit einem OH-Gehalt (100 %ig) von 3,3 %, einer Säurezahl (100 %ig) von 21 mg KOH/g und einem Festkörpergehalt von ca. 45 % bei einer Viskosität (frisch hergestellt) von ca.1500 mPas (23°C, Schergefälle 40⁻¹). Der pH-Wert (10 %ig in Wasser) beträgt 8,1, der Neutralisationsgrad beträgt 105 %. Die Dispersion ist gut filtrierbar und weist eine mittlere Teilchengröße von ca.110 nm auf. Nach 6 Wochen Lagerung bei Raumtemperatur beträgt die Viskosität der Dispersion 600 mPas.

### Beispiel 9 (nicht erfindungsgemäß, entspricht Bsp. A1 aus EP-A 0 358 979):

In einem 4 1-Reaktionsgefäß mit Rühr-, Kühl- und Heizvorrichtung werden 900 g Butylacetat vorgelegt und auf 110°C erhitzt. Dann wird eine Mischung aus 381 g Methylmethacrylat, 459 g Hydroxyethylmethacrylat, 450 g Butylacrylat, 150 g Acrylsäure und 50 g AIBN in 4 Stunden gleichmäßig zudosiert. Man hält 30 min bei 110°C und gibt anschließend 10 g *tert*.Butyl-peroctoat in 110 g Butylacetat zu. Nach weiteren 6 Stunden Nachrühren bei 110°C destilliert man bei 200 bis 400 mbar ca. 100 ml Butylacetat ab; diese abdestillierte Menge wird durch frisches Butylacetat ersetzt.

In einem 6 1-Reaktionsgefäß mit Rühr-, Kühl- und Heizvorrichtung und Destillationsbrücke legt man dann eine auf 95°C erwärmte Lösung von 143 g 25 %iger Ammoniaklösung in 3500 g dest. Wasser vor. Man lässt nun die Polymerlösung in einer Stunde in die wässrige Ammoniaklösung fließen und destilliert das Butylacetat azeotrop ab. Die Menge des mit Butylacetat abdestillierten Wassers wird kontinuierlich ersetzt. Man erhält ein in Wasser dispergiert vorliegendes Copolymerisat mit einem OH-Gehalt (100 %ig) von 4,0 %, einer Säurezahl (100 %ig) von 90 mg KOH/g und einem Festkörpergehalt von 28 % bei einer Viskosität (frisch hergestellt) von ca.2000 mPas (23°C, Schergefälle 40⁻¹). Der pH-Wert (10 %ig in Wasser) beträgt 6,4, der Neutralisationsgrad beträgt 101 %. Die Dispersion weist eine mittlere Teilchengröße von ca. 30 nm auf. Nach 6 Wochen Lagerung bei Raumtemperatur ist die Viskosität der Dispersion auf 3100 mPas angestiegen.

### Beispiel 10 (nicht erfindungsgemäß, entspricht Bsp. P6 aus EP-A 0 365 775):

In einem 6 1-Reaktionsgefäß mit Rühr-, Kühl- und Heizvorrichtung werden 500 g Butylglykol eingewogen und auf 140°C erhitzt. Dann wird eine Mischung aus 750 g Methylmethacrylat, 575 g Hydroxypropylacrylat, 550 g Butylacrylat und 500 g Butylmethacrylat in 3 Stunden 50 min und direkt im Anschluss daran 125 g Acrylsäure in 20 min zudosiert. Parallel dazu wird in 4 Stunden 30 min eine Lösung von 112,5 g tert.Butylperbenzoat in 125 g Butylglykol zudosiert. Nach Beendigung der Zugabe der Initiatorlösung rührt man 1 weitere Stunde bei 140°C; dann wird auf 95°C abgekühlt, 124 g Dimethylethanolamin zugegeben, homogenisiert und in 2900 g Wasser dispergiert. Man erhält ein in Wasser dispergiert vorliegendes Copolymerisat mit einem OH-Gehalt (100 %ig) von 3,0 %, einer Säurezahl (100 %ig) von 39 mg KOH/g und einem Festkörpergehalt von 43 % bei einer Viskosität (frisch hergestellt) von ca. 1600 mPas (23°C, Schergefälle 40⁻¹). Der pH-Wert (10 %ig in Wasser) beträgt 7,4, der Neutralisationsgrad beträgt 80 %. Die Dispersion weist eine mittlere Teilchengröße von ca. 135 nm auf. Mit einem Gehalt von 10,3 % bezogen auf Lieferform an Butylglykol weist die Dispersion einen sehr hohen Gehalt organischer Colöser auf. Nach 6 Wochen Lagerung bei Raumtemperatur beträgt die Viskosität der Dispersion 1270 mPas.

### Beisipiel 11 (nicht erfindungsgemäß, entspricht Bsp. P2 aus EP-A 0 363 723):

In einem 6 1-Reaktionsgefäß mit Rühr-, Kühl- und Heizvorrichtung werden 500 g Butylglykol eingewogen und auf 140°C erhitzt. Dann wird eine Mischung aus 187 g Methylmethacrylat, 187 g Styrol, 288 g Hydroxypropylacrylat, 275 g Butylacrylat und 250 g Butylmethacrylat in 1 Stunden 53 min und direkt im Anschluss daran 62,5 g Acrylsäure in 7min zudosiert. Anschließend wird erneut eine Mischung aus 187 g Methylmethacrylat, 187 g Styrol, 288 g Hydroxypropylacrylat, 275 g Butylacrylat und 250 g Butylmethacrylat in 1 Stunden 52 min und direkt im Anschluss daran 62,5 g Acrylsäure in 8 min zudosiert. Parallel dazu wird in 4 Stunden 30 min, beginnend mit dem Start des ersten Monomerzulaufs, eine Lösung von 112,5 g tert.Butylperbenzoat in 125 g Butylglykol zudosiert. Nach Beendigung der Zugabe der Initiatorlösung rührt man 1 weitere Stunde bei 140°C; dann wird auf 95°C abgekühlt, 124 g Dimethylethanolamin zugegeben, homogenisiert und in 2950 g Wasser dispergiert. Man erhält ein in Wasser dispergiert vorliegendes Copolymerisat mit einem OH-Gehalt (100 %ig) von 3,0 %, einer Säurezahl (100 %ig) von 40 mg KOH/g und einem Festkörpergehalt von 42 % bei einer Viskosität (frisch hergestellt) von ca.1400 mPas (23°C, Schergefälle 40⁻¹). Der pH-Wert (10 %ig in Wasser) beträgt 7,7, der Neutralisationsgrad beträgt 80 %. Die Dispersion weist eine mittlere Teilchengröße von ca. 190 nm auf. Mit einem Gehalt von 10,1 % bezogen auf Lieferform an Butylglykol weist die Dispersion einen sehr hohen Gehalt organischer Colöser auf. Nach ca. 4 Wochen Lagerung bei Raumtemperatur zeigt die Dispersion Phasentrennung.

### Beispiel 12 (nicht erfindungsgemäß, entspricht Bsp. A2 aus DE-A 4 322 242):

In einem 6 1-Reaktionsgefäß mit Rühr-, Kühl- und Heizvorrichtung werden 480 g Ethoxyethylpropionat und 200 g Cardura^{®} E 10 (Glycidylester der Versaticsäure, Shell Chem.) eingewogen und auf 120°C erhitzt. Dann wird eine Mischung aus 160 g Methylmethacrylat, 154g Styrol, 220 g Hydroxyethylmethacrylat, 100 g 2-Ethylhexylacrylat und 200 g Butylmethacrylat in 2 Stunden und direkt im Anschluss daran eine Mischung aus 160 g Methylmethacrylat, 154g Styrol, 220 g Hydroxyethylmethacrylat, 100 g 2-Ethylhexylacrylat, 200 g Butylmethacrylat und 132 g Acrylsäure in 2 Stunden zudosiert. Parallel dazu wird in 4 Stunden 30 min, beginnend mit dem Start des ersten Monomerzulaufs, 245 g einer 49 %igen Lösung tert.Butylper(ethylhexanoat) in Butylacetat zudosiert. Nach Beendigung der Zugabe der Initiatorlösung rührt man weitere 90 min bei 120°C; dann wird auf 80°C abgekühlt, in 30 min 55 g Dimethylethanolamin zugegeben, homogenisiert und mit 2700 g Wasser dispergiert. Aus dieser Dispersion wird das organische Lösemittel weitgehend im Vakuum azeotrop abdestilliert; per GC wurde ein Restgehalt von 6 % nachgewiesen. Das abdestillierte Wasser wird zurückgeführt. Man erhält ein in Wasser dispergiert vorliegendes Copolymerisat mit einem OH-Gehalt (100 %ig) von 3,5 %, einer Säurezahl (100 %ig) von 33 mg KOH/g und einem Festkörpergehalt von 46 % bei einer Viskosität (frisch hergestellt) von ca. 1300 mPas (23°C, Schergefälle 40⁻¹). Der pH-Wert (10 %ig in Wasser) beträgt 7,8, der Neutralisationsgrad beträgt 60 %. Die Dispersion weist eine mittlere Teilchengröße von ca. 200 nm auf. Bereits nach einer Lagerzeit von 3 Wochen bei Raumtemperatur zeigt die Dispersion Phasentrennung.

### Beispiel 13 (erfindungsgemäß)

In einem 30-1-Reaktionsgefäß mit Rühr-, Kühl- und Heizvorrichtung wurden 900 g Solvesso N100 und 627 g Butylglykol vorgelegt und auf 138°C aufgeheizt. Bei dieser Temperatur wurde eine Lösung aus 33 g Di-tert.-butylperoxid in 33 g Butylglykol innerhalb 20 Minuten zugetropft. Im Anschluss daran wurde eine Monomermischung aus 4260 g Methylmethacrylat, 776 g Hydroxyethylmethacrylat, 2014 g n-Butylacrylat und 1020 g Styrol sowie parallel dazu eine Lösung von 157 g Di-tert.-butylperoxid in 157 g Butylglykol innerhalb von 6 Stunden gleichmäßig zudosiert. Man hielt ca. 20 Minuten bei dieser Temperatur. Im Anschluss daran wurde eine Monomermischung aus 708 g Methylmethacrylat, 398 g Hydroxyethylmethacrylat, 556 g Butylacrylat und 245 g Acrylsäure sowie parallel dazu eine Lösung von 33 g Di-tert.-butylperoxid in 83 g Butylglykol innerhalb von 1,5 Stunden gleichmäßig zudosiert. Anschließend 1 Stunde bei 138°C nachgerührt, dann auf 100°C abgekühlt und 318 g N,N-Dimethylethanolamin zugegeben. Nach 30 Minuten Homogenisieren wurde innerhalb von 2 Stunden bei 80°C mit 9120 g Wasser dispergiert. Man erhielt eine Copolymerisat-Disersion mit folgenden Daten:

| | |
|---|---|
| OH-Gehalt (Festkörper; theoretisch berechnet) | 1,5% |
| Säurezahl (Festkörper) | 19mg KOH/g |
| Festkörpergehalt | 47,5 % |
| Viskosität | 2 130 mPas/23°C |
| pH-Wert (10%ig in Wasser) | 8,5 |
| Mittlere Teilchengröße | 120 nm |

Folgende Vernetzerharze werden in den Anwendungsbeispielen als Härter verwendet, alle Additive in den Präparationen können durch ähnliche, dem Fachmann bekannte Additive entsprechender Funktion ersetzt werden:

### Polyisocyanat H1:

Niedrigviskoses hydrophobes Polyisocyanat mit Isocyanuratstruktureinheiten auf Basis von Hexamethylendiisocyanat, Viskosität bei 23°C: ca. 1200 mPas, NCO-Gehalt: ca. 23,5 % (Desmodur^{®} N 3600 (Bayer AG))

### Polyisocyanat H2:

Hydrophiliertes Polyisocyanat mit Isocyanuratstruktureinheiten auf Basis von Hexamethylendiisocyanat, Viskosität bei 23°C: ca. 3500 mPas, NCO-Gehalt: ca. 17% (Bayhydur^{®} 3100 (Bayer AG))

### Aminovernetzerharz H3:

Handelsübliches Melaminharz Cymel^{®} 327 (Cytec)

### Polyisocyanat H4:

40 %ige wässrige Dispersion eines blockiertes Polyisocyanatvernetzers (Bayhydur^{®} BL 5140, Bayer AG)

### Anwendungsbeispiel 1:

### Herstellung eines pigmentierten Decklacks (Tabelle 1)

220 g Bindemittel-Dispersion aus Beispiel 1, 5 g Surfynol^{®} 104 (Air Products), 30 g dest. Wasser, 186 g Titandioxid Bayertitan^{®} R-KB-4 (Bayer AG) werden in einem Schüttler angerieben. 150 g des so erhaltenen Mahlguts werden mit 34 g Dispersion aus Bsp. 1, 0,44 g Byk^{®} 346 (Byk Chemie), 0,67 g Byk^{®} 380 (Byk Chemie) 1,2 g Acrysol^{®} RM8 (20 % in Ethanol, Rohm & Haas), 15,9 g des Polyisocyanats H1 und 21,7 g des Polyisocyanats H2 in einem Dissolver vermischt und mit ca. 38 g dest. Wasser auf eine Viskosität von ca. 30 Sekunden bei 23°C im DIN 4 Auslaufbecher eingestellt. Der Lackfestkörper liegt bei 54 %, der pH-Wert bei 8,2. Das NCO:OH-Verhältnis beträgt 1,5:1. Nach Applikation auf ein entfettetes Stahlblech wird der Lack bei Raumtemperatur getrocknet. Man erhält einen hochglänzenden harten Lackfilm. Kenndaten und Prüfergebnisse siehe Tabelle 1.

### Anwendungsbeispiele 2 - 4 und Vgl.5 - Vgl. 9

### Herstellung von pigmentierten Decklacken (Tabelle 1)

Man verfährt wie bei Anwendungsbeispiel 1 mit dem Unterschied, dass Bindemitteldispersionen entsprechend Tabelle 1 zur Lackformulierung eingesetzt werden. Das NCO:OH-Verhältnis wird jeweils auf 1,5:1 eingestellt, die Viskosität auf 30 Sekunden / DIN4-Becher.

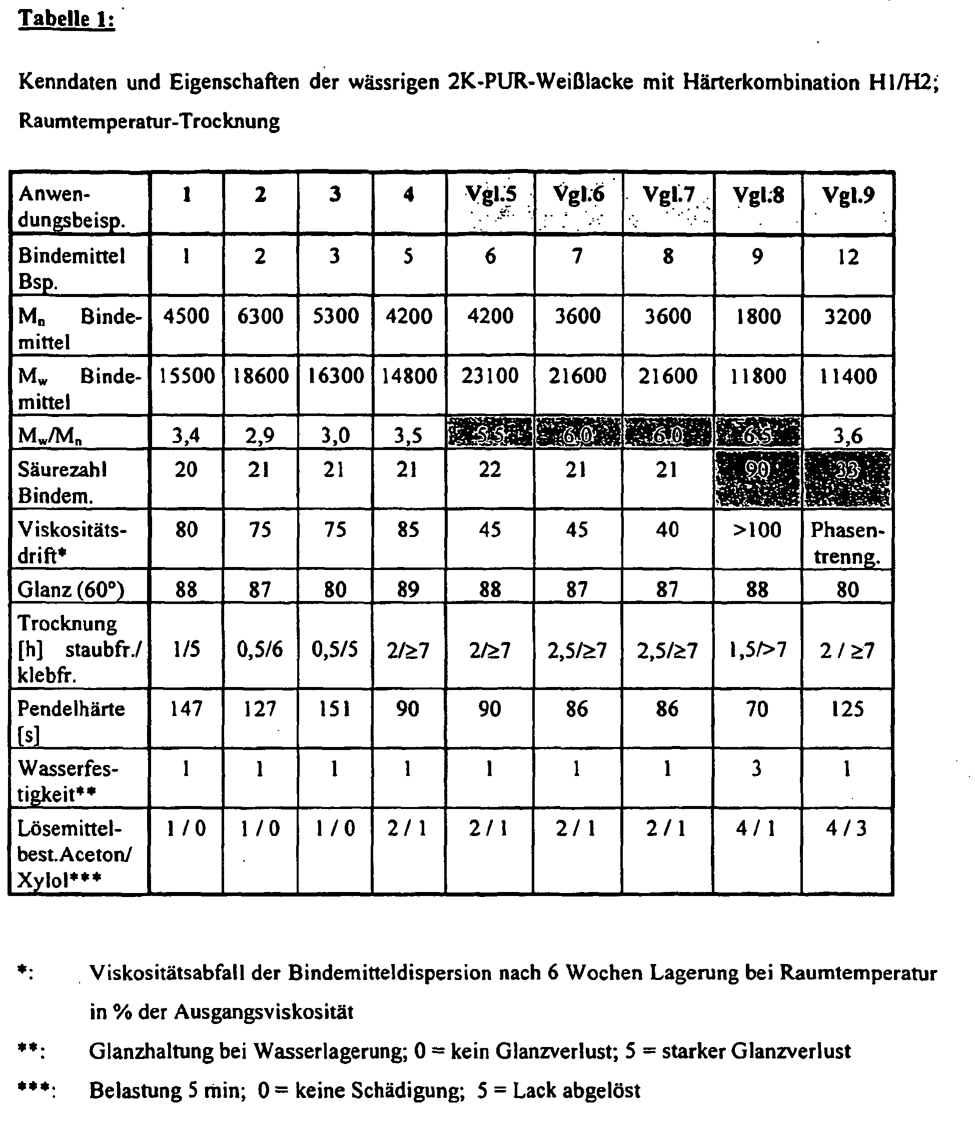

Man erkennt an Tabelle 1, dass die erfindungsgemäßen Anwendungsbeispiele 1 - 4 sehr gute Lackeigenschaften in Kombination mit guter Lagerstabilität der Bindemittel-Dispersion aufweisen. Bei den nicht erfindungsgemäß hergestellten Vergleichsbeispielen 5 - 7 ist die Polydispersität mit M_{w}/Mₙ ≈ 6 deutlich größer und die Viskosität der Bindemitteldispersionen fallen bei Lagerung stark ab. Beim Vergleichsbeispiel 8 weist die Bindemitteldispersion neben einer breiten Molekulargewichtsverteilung auch eine hohe (nicht erfindungsgemäße) Säurezahl auf; hier findet man zwar keinen Abfall in der Bindemittel-Viskosität, dafür aber Nachteile in Wasserfestigkeit und Lösemittelbeständigkeit des Lackfilms. Die in Anwendungsbeispiel 9 eingesetzte Dispersion liegt zwar mit ihrer Polydispersität im erfindungsgemäßen Bereich; die Dispersion wird aber nicht nach dem erfindungsgemäßen Verfahren hergestellt. So liegt z.B. die Säurezahl mit 33 über dem erfindungsgemäß erlaubten Bereich; trotzdem reicht diese nicht aus, um die Dispersion zu stabilisieren: nach kurzer Lagerzeit zeigt die Dispersion Phasentrennung. Außerdem weisen nach Vgl. Beispiel 9 hergestellte Lackfilme schlechte Lösemittelbeständigkeit auf.

### Anwendungsbeispiele 10 - 13 und Vgl.14, Vgl. 15:

### Herstellung von pigmentierten Decklacken (Tabelle 2)

Man verfährt wie bei Anwendungsbeispiel 1 mit dem Unterschied, dass Bindemitteldispersionen entsprechend Tabelle 2 zur Lackformulierung eingesetzt werden, und die Lacke statt bei Raumtemperatur hier 30 Minuten bei 80°C forciert getrocknet werden. Das NCO:OH-Verhältnis wird jeweils auf 1,5:1 eingestellt, die Viskosität auf 30 Sekunden/DIN4-Becher.

Man erkennt an Tabelle 2, dass die erfindungsgemäßen Anwendungsbeispiele 9 - 12 sehr gute Lackeigenschaften in Kombination mit guter Lagerstabilität der Bindemittel-Dispersion aufweisen. Bei den nicht erfindungsgemäß hergestellten Vergleichsbeispielen 13 und 14 ist die Polydispersität mit M_{w}/Mₙ = 3,2 zwar im Bereich der erfindungsgemäßen Dispersionen; die Dispersion dieser Vergleichsbeispiele werden aber nicht nach dem erfindungsgemäßen Verfahren hergestellt und ihre Säurezahlen liegen oberhalb des erfindungsgemäß erlaubten Bereichs. Bei beiden Vergleichsbeispielen findet man im Vergleich zu den erfindungsgemäßen Anwendungsbeispielen 9 - 12 Lackfilme mit deutlich geringerer Härte und Lösemittelbeständigkeit. Die dem Vgl. Beispiel 13 zugrundeliegende Dispersion zeigt auch deutlich Nachteile in der Wasserfestigkeit, während die dem Vgl. Beispiel 14 zugrundeliegende Dispersion nicht lagerstabil ist und sich nach kurzer Lagerzeit in 2 Phasen trennt.

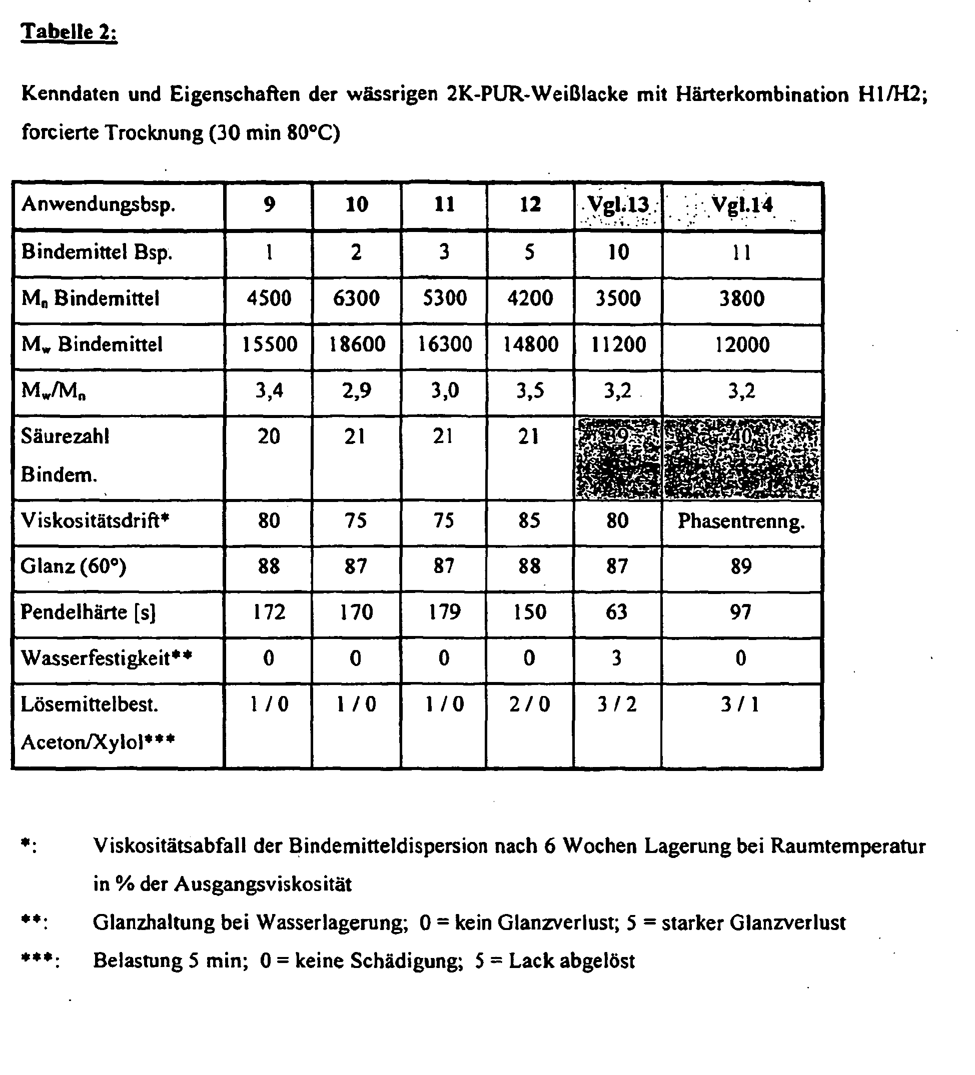

### Anwendungsbeispiel 16:

### Herstellung eines pigmentierten Decklacks

220 g Bindemittel-Dispersion aus Beispiel 5, 5 g Surfynol^{®} 104 (Air Products), 30 g dest. Wasser, 186 g Titandioxid Bayertitan^{®} R-KB-4 (Bayer AG) werden in einem Schüttler angerieben. 150 g des so erhaltenen Mahlguts werden mit 28 g Dispersion aus Beispiel 5, 0,44 g Byk^{®} 346 (Byk Chemie), 0,66 g Byk^{®} 380 (Byk Chemie) 1,2 g Acrysol^{®} RM8 (20 % in Ethanol, Rohm & Haas), und 41,1 g des Polyisocyanats H2 in einem Dissolver vermischt und mit ca. 29 g dest. Wasser auf eine Viskosität von ca. 30 Sekunden bei 23°C im DIN 4 Auslaufbecher eingestellt. Der Lackfestkörper liegt bei 54 %, der pH-Wert bei 8,2. Das NCO:OH-Verhältnis beträgt 1,5:1. Nach Applikation auf ein entfettetes Stahlblech wird der Lack bei Raumtemperatur getrocknet. Man erhält einen hochglänzenden harten Lackfilm, der eine gute Lösemittel- und Wasserfestigkeit aufweist. Durch forcierte Trocknung lässt sich das Beständigkeitsniveau des Lackfilms auf sehr gute Werte weiter verbessern.

### Anwendungsbeispiel 17:

### Herstellung eines pigmentierten Decklacks

351 g Bindemittel-Dispersion aus Beispiel 5, 8 g Surfynol^{®} 104 (Air Products), 48 g Wasser und 297 g Titandioxid Bayertitan^{®} R-KB-4 (Bayer AG) werden in einem Schüttler angerieben. Das so erhaltene Mahlgut wird mit 177 g Bindemittel-Dispersion aus Beispiel 5, 66 g Aminovemetzerharz H3, 6,3 g Acrysol^{®} RM8 (20 % in Ethanol, Rohm & Haas) und 10,5 g Byk^{®} 011 (Byk Chemie) vermischt und mit Wasser auf eine Viskosität von ca. 30 Sekunden bei 23°C im DIN 4 Auslaufbecher eingestellt. Der Lackfestkörper beträgt ca. 56 %; die Lagerstabilität des Lacks ist >6 Monate. Nach Applikation auf entfettetes Stahlblech wird der Lack für 10 Minuten bei 160°C eingebrannt, die Trockenfilmstärke beträgt ca. 35 µm. Man erhält einen harten Lackfilm (Pendelhärte 170 sec.) mit hohem Glanz und guter Lösemittelbeständigkeit.

### Anwendunesbeispiel 18:

### Herstellung eines pigmentierten Decklacks

230 g Bindemittel-Dispersion aus Beispiel 5, 7,35 g einer 20 %igen Lösung von Dimethylethanolamin in Wasser, 41 g Wasser und 184g Titandioxid Bayertitan^{®} R-KB-4 (Bayer AG) werden in einem Schüttler angerieben. Das so erhaltene Mahlgut wird mit 17,5 g Bindemittel-Dispersion aus Beispiel 5, 66,5 g Vernetzerharz H4, 4,9 g Lancoflow W (25 Gew.%-ig in Wasser; Lubrizol), 4,4 g NMP und 2,3 g einer 20 %igen Lösung von Dimethylethanolamin in Wasser vermischt und mit Wasser auf eine Viskosität von ca. 30 Sekunden bei 23°C im DIN 4 Auslaufbecher eingestellt. Der Lackfestkörper beträgt ca. 48 %; der pH-Wert 9,2. Nach Applikation auf entfettetes Stahlblech wird der Lack für 30 Minuten bei 150°C eingebrannt, die Trockenfilmstärke beträgt ca. 35 µm. Man erhält einen harten Lackfilm (Pendelhärte 175 sec.) mit hohem Glanz und guter Lösemittelbeständigkeit.

### Anwendungsbeispiel 19:

### Herstellung eines Klarlacks

378 g der Bindemittel-Dispersion aus Beispiel 4 werden mit 12,2 g Tinuvin^{®} 1130 (50 % in Butylglykolacetat, Ciba Geigy), 6,1 g Tinuvin^{®} 292 (50 % in Butylglykolacetat, Ciba Geigy), 3,1 g Baysilon^{®} OL 44 (10 % in Butylglykolacetat, Bayer AG), 62,1 g Butyldiglykolacetat und 111,9 g dest. Wasser vermischt (Komponente A). Die Härterkomponente B), bestehend aus 127 g Polyisocyanatvernetzer H1, wird mittels Düsenstrahl-Dispergierung in die Komponente A) eingearbeitet. Das so erhaltene reaktive 2-Komponenten-Polyurethansystem hat einen Festkörpergehalt von 45 %, das NCO:OH-Verhältnis beträgt ca. 1,5:1. Die Topfzeit beträgt >6 Stunden, die Viskosität bleibt in diesem Zeitraum annähernd konstant.

Der Klarlack wurde auf ein mit einem Basislack beschichteten Aluminiumblech bzw. auf Glasplatte durch Spritzapplikation aufgetragen und 5 Minuten bei Raumtemperatur abgelüftet. Nach Vortrocknung für 10 Minuten bei 80°C wurde der Lack 30 Minuten bei 130°C ausgehärtet. Man erhält einen klaren, hochglänzenden Lackfilm; Glanz (20°) = 85. Der Film weist eine sehr hohe Pendelhärte von 203 Sek., eine sehr gute Lösemittelbeständigkeit gegen Xylol, Methoxypropylacetat, Ethylacetat und Aceton sowie eine gute Beständigkeit gegen Wasser, verdünnte Schwefelsäure und verdünnte Natronlauge auf.

## Patentansprüche

1. Verfahren zur Herstellung von in Wasser dispergiert und/oder gelöst vorliegenden Copolymerisaten P, **dadurch gekennzeichnet, dass** man aufeinanderfolgend die Prozessschritte A bis D
A) Vorlegen von
A1) 0 bis 40 Gew.-% (bezogen auf das Copolymerisat P) eines hydroxyfunktionellen hydrophoben Copolymerisats mit einer für Dispergierung oder Lösen von A1 in Wasser nicht ausreichenden Säurezahl <10 mg KOH/g, einem OH-Gehalt von 0,5 bis 7 % (bezogen jeweils auf 100 %iges Harz), einem Zahlenmittel des Molekulargewichts von 1500 bis 20 000 und einem Gehalt an organischen Lösemitteln von 0 bis 60 % (bezogen auf die Masse von A1), und
A2) 0 bis 15 % (bezogen auf das Copolymerisat P) zusätzlichen organischen Lösemitteln,
wobei vor während oder im Anschluss von Schritt A auf die gewünschte Polymerisationstemperatur aufgeheizt wird,
B) vordosieren von 5 bis 40 % (bezogen auf die Summe B1 + C2 + D2) eines Radikalstarters B1, gegebenenfalls gelöst in einem organischen Lösemittel,
C) paralleles Zudosieren von 40 bis 80 % (bezogen auf das Copolymerisat P) eines hydrophoben, im Wesentlichen carboxylgruppenfreien Monomergemisch C1, bestehend aus
c1) 30 bis 90 % (Meth)acrylsäurester mit C₁ bis C₁₈-Kohlenwasserstoffresten im Alkoholteil und/oder Vinylaromaten und/oder Vinylester,
c2) 10 bis 60 % hydroxyfunktionellen Monomeren,
c3) 0 bis 2 % säuregruppenhaltigen Monomeren,
wobei sich c1 + c2 + c3 zu 100 % addieren,
und einem Radikalstarter C2 in einer Menge, die 25 - 90 % der Summe (B1 + C2 + D2) entspricht, gegebenenfalls gelöst in einem organischen Lösemittel
D) paralleles Zudosieren von 5 bis 50 % (bezogen auf das Copolymerisat P) eines hydrophilen Monomergemischs D1, bestehend aus
d1) 10 bis 70 % (Meth)acrylsäureester mit C₁ bis C₁₈-Kohlenwasserstoffresten im Alkoholteil und/oder Vinylaromaten und/oder Vinylester,
d2) 10 bis 70% hydroxyfunktionellen Monomeren und
d3) 5 bis 30 % säurefunktionellen Monomeren,
wobei sich d1 + d2 + d3 zu 100 % addieren, und einem Radikalstarter D2 in einer Menge, die 5 bis 40 % der Summe (B 1 + C2 + D2) entspricht, gegebenenfalls gelöst in einem organischen Lösemittel, wobei die Gesamtmenge (B1 + C2 + D2) des Radikalstarters (bezogen auf das Copolymerisat P) 0,8 bis 5,0 % beträgt und mindestens 60 % der insgesamt eingebauten Säuregruppen in Schritt D) in das_ Copolymerisat P eingebracht werden.
ausführt und das Copolymerisat P ein mittleres Molekulargewicht Mₙ von 3000 bis 7000, ein mittleres Molekulargewicht M_{w} von 10000 bis 250000 und eine Molekulargewichtsverteilung von M_{w}/Mₙ von 2,5 bis 4,0, einen Hydroxylgruppengehalt von 1 % bis 8 % aufweist und die Säurezahl des 100%igen Copolymerisats P 12 mg bis 30 mg KOH/g beträgt.

2. Copolymerisat P erhältlich gemäß Anspruch 1.

3. Copolymerisat P gemäß Anspruch 2, **dadurch gekennzeichnet, dass** das Copolymerisat ein mittleres Molekulargewicht Mₙ von 3500 bis 5500, ein mittleres Molekulargewicht M_{w} von 11000 bis 20000 und eine Molekulargewichtsverteilung M_{w}/Mₙ von 3,0 bis 4,0 aufweist.

4. Copolymerisat P nach Anspruch 2, **dadurch gekennzeichnet, dass** die nach den Schritten C) und D) erhaltenen Werte von Mₙ um weniger als 1500 und von M_{w}/Mₙ um weniger als 1,0 voneinander abweichen.

5. Copolymerisat P nach Anspruch 2, **dadurch gekennzeichnet, dass** die in Schritt D) aufgebauten Polymerketten ein mittleres Molekulargewicht Mₙ von 3000 - 4500 aufweisen.

6. Wässriges Überzugsmittel aus mindestens einem hydroxyfunktionellen in Wasser dispergiert oder gelöst vorliegenden Copolymerisat P gemäß Anspruch 2 mit einer Säurezahl, bezogen auf Festharz, von <30 mg KOH/g, gegebenenfalls weiteren in dieser Mischung gelöst oder dispergiert vorliegenden Bindemittelkomponenten sowie einem oder mehreren wasserlöslichen, wasserdispergierbaren bzw. in der wässrigen Bindemitteldispersion löslichen oder dispergierbaren Vernetzern.

7. Wässriges Überzugsmittel enthaltend Copolymerisate P nach Anspruch 2, **dadurch gekennzeichnet, dass** es eine oder mehrere nicht wasserdispergierbare/ - lösliche und/oder wasserdispergierbare Vernetzerkomponenten mit freien Isocyanatgruppen enthält.

8. Wässriges Überzugsmittel enthaltend Copolymerisate P nach Anspruch 2, **dadurch gekennzeichnet, dass** es eine oder mehrere hydrophil modifizierte Vernetzerkomponenten mit freien Isocyanatgruppen enthält.

9. Wässriges Überzugsmittel enthaltend Copolymerisate P nach Anspruch 2, **dadurch gekennzeichnet, dass** es eine oder mehrere nicht wasserdispergierbare/ - lösliche und/oder wasserdispergierbare Vernetzerkomponenten mit blockierten Isocyanatgruppen enthält.

10. Wässriges Überzugsmittel enthaltend Copolymerisate P nach Anspruch 2, **dadurch gekennzeichnet, dass** es eine oder mehrere hydrophil modifizierte Vernetzerkomponenten mit blockierten Isocyanatgruppen enthält.

11. Wässriges Überzugsmittel enthaltend Copolymerisate P nach Anspruch 2, **dadurch gekennzeichnet, dass** es eine oder mehrere Vernetzerkomponenten aus der Gruppe der Aminoplastharze enthält.

12. Wässriges Überzugsmittel enthaltend Copolymerisate P nach Anspruch 2, **dadurch gekennzeichnet, dass** es eine Kombination von mindestens 2 Vernetzerkomponenten, ausgewählt aus der Gruppe: hydrophil modifizierte Polyisocyanatvernetzer mit freien NCO-Gruppen, hydrophobe Polyisocyanatvernetzer mit freien NCO-Gruppen, hydrophil modifizierte blockierte Polyisocyanatvernetzer, hydrophobe blockierte Polyisocyanatvernetzer und Aminoplastharze enthält.

13. Verwendung von wässrigen Überzugsmitteln enthaltend Copolymerisate P nach Anspruch 2 in oder als bei Raumtemperatur bis 80°C aushärtbaren Lacken und Beschichtungen für Holz, Metall, Glas, Kunststoffe, mineralische Untergründe und Textil.

14. Verwendung von wässrigen Überzugsmitteln enthaltend Copolymerisate P nach Anspruch 2 in oder als bei 80°C bis 220°C aushärtbaren Einbrennlacken für Metall, Glas, Textil oder Kunststoffe.

15. Verwendung von wässrigen Überzugsmitteln enthaltend Copolymerisate P nach Anspruch 2 in oder als wässrige Zweikomponenten-Polyurethanlacke für die Metallbeschichtung.

16. Verwendung von wässrigen Überzugsmitteln enthaltend Copolymerisate P nach Anspruch 2 in oder als wässrige Zweikomponenten-Polyurethanlacke für die Kunststoffbeschichtung.

17. Verwendung von wässrigen Überzugsmitteln enthaltend Copolymerisate P nach Anspruch 2 in oder als wässrige Zweikomponenten-Polyurethanlack für Klarlacke.

18. Verwendung von wässrigen Überzugsmitteln enthaltend Copolymerisate P nach Anspruch 2 in oder als wässrige Zweikomponenten-Polyurethansysteme für pigmentierte Hochglanzlacke.

19. Verwendung von wässrigen Überzugsmitteln enthaltend Copolymerisate P nach Anspruch 2 in oder als wässrige Einbrennlacke für die Metallbeschichtung.

## Claims

1. Process for producing copolymers P in solution and/or dispersion in water, **characterized in that** process steps A to D are carried out successively
A) initially introducing
A1) 0 to 40 wt. % (based on the copolymer P) of a hydroxy-functional hydrophobic copolymer having an acid number of <10 mg KOH/g, which is not sufficient for dispersing or dissolving A1 in water, an OH content of 0.5 to 7% (based in each case on resin in 100% form), a number average molecular weight of 1,500 to 20,000 and a content of organic solvents of 0 to 60% (based on the mass of A1), and
A2) 0 to 15% (based on the copolymer P) of additional organic solvents,
and heating the reaction mixture to the desired polymerization temperature before, during or after step A,
B) initially metering 5 to 40% (based on the sum of B 1 + C2 + D2) of a free-radical initiator B1, optionally dissolved in an organic solvent,
C) metering in in parallel 40 to 80% (based on the copolymer P) of a hydrophobic monomer mixture C1 which is substantially free from carboxyl groups and is composed of
c1) 30 to 90% of (meth)acrylic acid esters with C₁ to C₁₈-hydrocarbon radicals in the alcohol portion, and/or vinyl aromatics and/or vinyl esters,
c2) 10 to 60% of hydroxy-functional monomers, and
c3) 0 to 2% of monomers containing acid groups,
wherein c1 + c2 + c3 add up to 100%,
and a free-radical initiator C2 in an amount which corresponds to 25-90% of the sum (B1 + C2 + D2), optionally dissolved in an organic solvent, and
D) metering in in parallel 5 to 50% (based on the copolymer P) of a hydrophilic monomer mixture D1 composed of
d1) 10 to 70% of (meth)acrylic acid esters with C₁ to C₁₈-hydrocarbon radicals in the alcohol portion, and/or vinyl aromatics and/or vinyl esters,
d2) 10 to 70% of hydroxy-functional monomers, and
d3) 5 to 30% of acid-functional monomers,
wherein d1 + d2 + d3 add up to 100%, and a free-radical initiator D2 in an amount which corresponds to 5 to 40% of the sum (B1 + C2 + D2), optionally dissolved in an organic solvent, the total amount (B1 + C2 + D2) of free-radical initiator (based on the copolymer P) being 0.8 to 5.0% and at least 60% of the acid groups incorporated overall in step D) are introduced into the copolymer P,
and the copolymer P has an average molecular weight, Mₙ, of 3,000 to 7,000, an average molecular weight, M_{w}, of 10,000 to 250,000 and a molecular weight distribution, M_{w}/Mₙ, of 2.5 to 4.0, and a hydroxyl content of 1% to 8%, and the acid number of the copolymer P in 100% form is 12 mg to 30 mg KOH/g.

2. Copolymer P obtainable according to Claim 1.

3. Copolymer P according to Claim 2, **characterized in that** the copolymer has an average molecular weight, Mₙ, of 3,500 to 5,500, an average molecular weight, M_{w}, of 11,000 to 20,000 and a molecular weight distribution, M_{w}/Mₙ, of 3.0 to 4.0.

4. Copolymer P according to Claim 2, **characterized in that** the values of Mₙ obtained after steps C) and D) deviate from each other by less than 1,500, and those of M_{w}/Mₙ deviate from each other by less than 1.0.

5. Copolymer P according to Claim 2, **characterized in that** the polymer chains prepared in step D) have an average molecular weight, Mₙ, of 3,000 to 4,500.

6. Aqueous coating composition comprising at least one hydroxy-functional copolymer P according to Claim 2, in solution or dispersion in water, having an acid number, based on solid resin, of < 30 mg KOH/g, optionally further binder components dispersed or dissolved in this mixture, and one or more crosslinkers which are soluble in water, dispersible in water and/or soluble or dispersible in the aqueous binder dispersion.

7. Aqueous coating composition comprising copolymers P according to Claim 2, **characterized in that** it comprises one or more non-water dispersible/soluble and/or water dispersible crosslinker components having free isocyanate groups.

8. Aqueous coating composition comprising copolymers P according to Claim 2, **characterized in that** it comprises one or more hydrophilically modified crosslinker components having free isocyanate groups.

9. Aqueous coating composition comprising copolymers P according to Claim 2, **characterized in that** it comprises one or more non-water dispersible/soluble and/or water dispersible crosslinker components having blocked isocyanate groups.

10. Aqueous coating composition comprising copolymers P according to Claim 2, **characterized in that** it comprises one or more hydrophilically modified crosslinker components having blocked isocyanate groups.

11. Aqueous coating composition comprising copolymers P according to Claim 2, **characterized in that** it comprises one or more crosslinker components from the group of amino resins.

12. Aqueous coating composition comprising copolymers P according to Claim 2, **characterized in that** it comprises a combination of at least 2 crosslinker components selected from the following group: hydrophilically modified polyisocyanate crosslinkers having free NCO groups, hydrophobic polyisocyanate crosslinkers having free NCO groups, hydrophilically modified blocked polyisocyanate crosslinkers, hydrophobic blocked polyisocyanate crosslinkers, and amino resins.

13. Use of aqueous coating compositions comprising copolymers P according to Claim 2 in or as paints and coatings which can be cured at room temperature to 80°C for wood, metal, glass, plastics, mineral substrates and textile.

14. Use of aqueous coating compositions comprising copolymers P according to Claim 2 in or as baking varnishes which can be cured at 80°C to 220°C for metal, glass, textile or plastics.

15. Use of aqueous coating compositions comprising copolymers P according to Claim 2 in or as aqueous two-component polyurethane paints for coating metal.

16. Use of aqueous coating compositions comprising copolymers P according to Claim 2 in or as aqueous two-component polyurethane paints for coating plastic.

17. Use of aqueous coating compositions comprising copolymers P according to Claim 2 in or as aqueous two-component polyurethane paint for clear paints.

18. Use of aqueous coating compositions comprising copolymers P according to Claim 2 in or as aqueous two-component polyurethane systems for pigmented high-gloss paints.

19. Use of aqueous coating compositions comprising copolymers P according to Claim 2 in or as aqueous baking varnishes for coating metal.

## Revendications

1. Procédé de préparation de copolymères P, dispersés et/ou dissous dans l'eau, **caractérisé en ce que** l'on effectue successivement les étapes A à D :
A) présentation de
A1) 0 à 40% en poids (sur base du copolymère P) d'un copolymère hydrophobe à fonctions hydroxyle, ayant un indice d'acide < 10 mg KOH/g, non suffisant pour une dispersion ou une dissolution de A1 dans l'eau, une teneur en OH allant de 0,5 à 7% (chaque fois, sur base de 100% de résine), une moyenne en nombre du poids moléculaire allant de 1500 à 20 000 et une teneur en solvants organiques allant de 0 à 60% (sur base de la masse de A1), et
A2) 0 à 15% (sur base du copolymère P) de solvants organiques supplémentaires,
où avant, pendant ou à la suite de l'étape A, on chauffe à la température de polymérisation souhaitée,
B) addition dosée préalable de 5 à 40% (sur base de la somme B1 + C2 + D2) d'un initiateur de radicaux B1, le cas échéant dissous dans un solvant organique,
C) addition dosée en parallèle de 40 à 80% (sur base du copolymère P) d'un mélange de monomères hydrophobes, essentiellement exempts de radicaux carboxyle, C1, consistant en
c1) 30 à 90% d'ester d'acide (méth)acrylique ayant des restes hydrocarbure en C₁ à C₁₈ comme partie alcool et/ou d'aromatique vinylique et/ou d'ester vinylique,
c2) 10 à 60% de monomères à fonction hydroxyle,
c3) 0 à 2% de monomères contenant des radicaux acides,
où c1 + c2 + c3 font 100%,
et un initiateur de radicaux C2 en une quantité qui correspond à 25-90% de la somme (B1 + C2 + D2), le cas échéant dissous dans un solvant organique,
D) addition dosée en parallèle de 5 à 50% (sur base du copolymère P) d'un mélange de monomères hydrophiles D1, consistant en
d1) 10 à 70% d'ester d'acide (méth)acrylique ayant des restes hydrocarbure en C₁ à C₁₈ comme partie alcool et/ou d'aromatique vinylique et/ou d'ester vinylique,
d2) 10 à 70% de monomères à fonction hydroxyle, et
d3) 5 à 30% de monomères à fonction acide, où d1 + d2 + d3 font 100%,
et un initiateur de radicaux D2 en une quantité qui correspond à 5-40% de la somme (B1 + C2 + D2), le cas échéant dissous dans un solvant organique, où la quantité totale (B1 + C2 + D2) des initiateurs radicalaires (sur base du copolymère P) se situe dans l'intervalle allant de 0,8 à 5,0% et au moins 60% de tous les radicaux acides introduits sont incorporés dans le copolymère P à l'étape D,
et le copolymère P présente un poids moléculaire moyen Mn allant de 3000 à 7000, un poids moléculaire moyen Mw allant de 10 000 à 250 000 et une distribution des poids moléculaires Mw/Mn allant de 2,5 à 4,0, une teneur en radicaux hydroxyle allant de 1% à 8% et l'indice d'acide du copolymère P à 100%, sur situe dans l'intervalle allant de 12 mg à 30 mg KOH/g.

2. Copolymère P obtenu selon la revendication 1.

3. Copolymère P selon la revendication 2, **caractérisé en ce que** le copolymère présente un poids moléculaire moyen Mn allant de 3500 à 5500, un poids moléculaire moyen Mw allant de 11 000 à 20 000 et une distribution des poids moléculaires Mw/Mn allant de 3,0 à 4,0.

4. Copolymère P selon la revendication 2, **caractérisé en ce que** les valeurs obtenues après les étapes C) et D) dévient l'une de l'autre, de moins de 1500 pour Mn et de moins de 1,0 pour M_{w}/Mₙ.

5. Copolymère P selon la revendication 2, **caractérisé en ce que** les chaînes polymères élaborées à l'étape D) présentent un poids moléculaire moyen Mn allant de 3000 à 4500.

6. Revêtement aqueux constitué d'au moins un copolymère P à fonction hydroxyle, dispersé ou dissous dans l'eau, selon la revendication 2, ayant un indice d'acide, sur base de la résine solide, < 30 mg KOH/g, le cas échéant d'autres composants liants, dissous ou dispersés dans ce mélange, ainsi qu'un ou plusieurs agents de réticulation solubles dans l'eau, dispersibles dans l'eau ou solubles ou dispersibles dans la dispersion aqueuse de liants.

7. Revêtement aqueux contenant le copolymère P selon la revendication 2, **caractérisé en ce qu'**il contient un ou plusieurs composants de réticulation non dispersibles/solubles dans l'eau et/ou dispersibles dans l'eau, ayant des radicaux isocyanate libres.

8. Revêtement aqueux contenant le copolymère P selon la revendication 2, **caractérisé en ce qu'**il contient un ou plusieurs composants de réticulation modifiés hydrophiles, ayant des radicaux isocyanate libres.

9. Revêtement aqueux contenant le copolymère P selon la revendication 2, **caractérisé en ce qu'**il contient un ou plusieurs composants de réticulation non dispersibles/solubles dans l'eau et/ou dispersibles dans l'eau, ayant des radicaux isocyanate bloqués.

10. Revêtement aqueux contenant le copolymère P selon la revendication 2, **caractérisé en ce qu'**il contient un ou plusieurs composants de réticulation modifiés hydrophiles, ayant des radicaux isocyanate bloqués.

11. Revêtement aqueux contenant le copolymère P selon la revendication 2, **caractérisé en ce qu'**il contient un ou plusieurs composants de réticulation du groupe des résines aminoplaste.

12. Revêtement aqueux contenant le copolymère P selon la revendication 2, **caractérisé en ce qu'**il contient une combinaison d'au moins 2 composants de réticulation, choisis parmi le groupe : agent de réticulation polyisocyanate modifié hydrophile avec radicaux NCO libres, agent de réticulation polyisocyanate hydrophobe avec radicaux NCO libres, agent de réticulation polyisocyanate modifié hydrophile, bloqué, agent de réticulation polyisocyanate hydrophobe, bloqué et résine aminoplaste.

13. Utilisation de revêtements aqueux contenant le copolymère P selon la revendication 2, dans une ou en tant que laque, peinture, vernis et enduit, durcissable de la température ambiante à 80°C, pour le bois, les métaux, le verre, les matières plastiques, les substrats minéraux et les textiles.

14. Utilisation de revêtements aqueux contenant le copolymère P selon la revendication 2, dans une ou en tant que laque à cuire, durcissable de 80°C à 220°C, pour les métaux, le verre, les textiles ou les matières plastiques.

15. Utilisation de revêtements aqueux contenant le copolymère P selon la revendication 2, dans une ou en tant que laque polyuréthanne aqueuse à deux composants, pour l'enduction des métaux.

16. Utilisation de revêtements aqueux contenant le copolymère P selon la revendication 2, dans une ou en tant que laque polyuréthanne aqueuse à deux composants, pour l'enduction des matières plastiques.

17. Utilisation de revêtements aqueux contenant le copolymère P selon la revendication 2, dans une ou en tant que laque polyuréthanne aqueuse à deux composants, pour laque transparente.

18. Utilisation de revêtements aqueux contenant le copolymère P selon la revendication 2, dans une ou en tant que laque polyuréthanne aqueuse à deux composants, pour laque pigmentée très brillante.

19. Utilisation de revêtements aqueux contenant le copolymère P selon la revendication 2, dans une ou en tant que laque à cuire pour l'enduction des métaux.
